(19) **Europäisches Patentamt / European Patent Office / Office européen des brevets**

(11) **EP 2 238 177 B1**

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(21) Anmeldenummer: **09707022.1**

(22) Anmeldetag: **16.01.2009**

(51) Int Cl.:
*C08C 1/15* (2006.01)    *C08F 236/12* (2006.01)

(86) Internationale Anmeldenummer:
**PCT/EP2009/050460**

(87) Internationale Veröffentlichungsnummer:
**WO 2009/095313 (06.08.2009 Gazette 2009/32)**

(54) **OPTIONAL ALKYLTHIO-ENDGRUPPEN ENTHALTENDE OPTIONAL HYDRIERTE NITRILKAUTSCHUKE**

NITRILE RUBBERS WHICH OPTIONALLY CONTAIN ALKYLTHIO TERMINAL GROUPS AND WHICH ARE OPTIONALLY HYDROGENATED

CAOUTCHOUCS NITRILE OPTIONNELLEMENT HYDROGÉNÉS CONTENANT OPTIONNELLEMENT DES TERMINAISONS ALKYLTHIO

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **29.01.2008 EP 08150760**

(43) Veröffentlichungstag der Anmeldung:
**13.10.2010 Patentblatt 2010/41**

(73) Patentinhaber: **LANXESS Deutschland GmbH 51369 Leverkusen (DE)**

(72) Erfinder: **OBRECHT, Werner 47447 Moers (DE)**

(56) Entgegenhaltungen:
| | |
|---|---|
| **EP-A- 0 779 301** | **EP-A- 1 840 154** |
| **EP-A- 1 857 491** | **WO-A-2008/142039** |
| **WO-A-2008/142042** | **DE-A1-102004 013 008** |
| **GB-A- 785 631** | |

**Beschreibung**

Die Erfindung betrifft einen Nitrilkautschuk, ein Verfahren zu dessen Herstellung, vulkanisierbare Mischungen auf Basis dieses Nitrilkautschuks, ferner ein Verfahren zur Herstellung von Vulkanisaten aus diesen Mischungen sowie die dabei erhaltenen Vulkanisate.

Unter Nitrilkautschuken, abgekürzt auch als "NBR" bezeichnet, werden Kautschuke verstanden, bei denen es sich um Co- oder Terpolymere aus mindestens einem $\alpha,\beta$-ungesättigten Nitril, mindestens einem konjugierten Dien und gegebenenfalls einem oder mehreren weiteren copolymerisierbaren Monomeren handelt.

Derartige Nitrilkautschuke und Verfahren zur Herstellung solcher Nitrilkautschuke sind bekannt, siehe z.B. W. Hofmann, Rubber Chem. Technol. 36 (1963) 1 und Ullmann's Encyclopedia of Industrial Chemistry, VCH Verlagsgesellschaft, Weinheim, 1993, S. 255-261. In diesen Publikationen findet sich kein Hinweis, ob und gegebenenfalls wie man die Vulkanisationsgeschwindigkeit solcher Kautschuke und das Eigenschaftsprofil, insbesondere das Niveau des Moduls beeinflussen kann.

NBR wird durch Emulsionspolymerisation hergestellt, wobei zunächst ein NBR-Latex erhalten wird. Der NBR-Feststoff wird aus diesem Latex durch Koagulation isoliert. Für die Koagulation werden Salze und Säuren verwendet. Über die Koagulation von Latices mit Metallsalzen ist bekannt, dass von einwertigen Metallionen, z.B. in Form von Natriumchlorid, deutlich größere Elektrolytmengen benötigt werden als von mehrwertigen Metallionen, z.B. in Form von Calciumchlorid, Magnesiumchlorid oder Aluminiumsulfat (**Kolloid-Z. <u>154,</u>** 154 (1957)). Es ist ferner bekannt, dass der Einsatz mehrwertiger Metallionen zu "einem mehr oder weniger großen Einschluss des Emulgators im Produkt" führt (Houben-Weyl (1961), Methoden der Org. Chemie, Makromolekulare Stoffe 1, S. 484). Gemäß Houben-Weyl (1961), Methoden der Org. Chemie, Makromolekulare Stoffe 1, S. 479 "müssen nicht nur die benutzten Elektrolyte sehr sorgfältig wieder ausgewaschen werden, sondern das Fertigprodukt soll auch frei von den Katalysatoren und Emulgatoren des Ansatzes sein. Schon geringe Reste von Elektrolyten ergeben trübe und wolkige Press- und Spritzstücke, verderben die elektrischen Eigenschaften und erhöhen das Wasseraufnahmevermögen des Fertigprodukts" (Zitat). Im Houben-Weyl findet sich kein Hinweis, wie ein Latex aufgearbeitet werden muss, um Nitrilkautschuke zu erhalten, die schnell vulkanisieren und nach der Vulkanisation ein hohes Modulniveau aufweisen.

Aus DD 154 702 ist ein Verfahren zur radikalischen Copolymerisation von Butadien und Acrylnitril in Emulsion bekannt, das über ein spezielles, zweckmäßigerweise computergestütztes Dosierprogramm für die Monomere sowie den Molekulargewichtsregler, wie z. B. tert. Dodecylmercaptan, gesteuert wird und bei dem die erhaltenen Latices durch Koagulation im sauren Medium zum Festkautschuk aufgearbeitet werden. Als wesentlicher Vorteil des Verfahrens wird ausgeführt, dass die als Emulgatoren eingesetzten Harz- und/oder Fettsäureseifen durch die Verwendung von Säuren bei der Koagulation im Kautschuk verbleiben, also nicht wie bei anderen Verfahren ausgewaschen werden. Hierfür wird neben dem Vorteil guter Eigenschaften des NBR besonders die Verbesserung der Ökonomie des Verfahrens und die Vermeidung der Abwasserbelastung durch den ausgewaschenen Emulgator reklamiert. Für die erhaltenen Butadien-Acrylnitril-Copolymerisate mit 10-30 Gew. % Acrylnitril wird ausgeführt, dass sie sich durch gute Elastizitäts- und Tieftemperatur-Eigenschaften kombiniert mit einer erhöhten Quellbeständigkeit und eine vorteilhafte Verarbeitbarkeit auszeichnen. Maßnahmen, durch die eine Beeinflussung der Vulkanisationsgeschwindigkeit des Nitrilkautschuks sowie des Eigenschaftsprofils des vulkanisierten NBR möglich ist, können der Lehre dieses Patents nicht entnommen werden.

Aus JP 27902/73 (Appl. 69 32,322) ist bekannt, dass durch die Verwendung von Aminen bei der Koagulation von Latices mit Magnesiumsalzen, beispielsweise durch Kombination von Diethylentriamin und Magnesiumchlorid, die Anvulkanisationsgeschwindigkeit reduziert und somit die Scorchbeständigkeit von Nitrilkautschuken verbessert werden kann. Weitergehende Hinweise sind aus diesem Stand der Technik nicht zu entnehmen.

Aus der DE OS 23 32 096 ist bekannt, dass Kautschuke aus ihren wässrigen Dispersionen mit Hilfe von Methylcellulose und einem wasserlöslichen Alkali-, Erdalkali-, Aluminium- oder Zinksalz ausgefällt werden können. Als bevorzugtes wasserlösliches Salz wird Natriumchlorid eingesetzt. Als Vorteil dieses Verfahrens wird beschrieben, dass ein Koagulat erhalten wird, welches von Fremdbestandteilen, wie Emulgatoren, Katalysatorresten und dergleichen fast vollständig frei ist, da diese Fremdstoffe zusammen mit dem Wasser beim Abtrennen des Koagulats entfernt und etwa noch verbleibende Reste mit weiterem Wasser vollständig ausgewaschen werden. Aussagen zum Vulkanisationsverhalten derart hergestellter Kautschuke werden nicht getroffen. In DE OS 24 25 441 werden bei der Elektrolytkoagulation von Kautschuklatices als Hilfsmittel statt der Methylcellulose 0,1-10 Gew.% (bezogen auf den Kautschuk) wasserlösliche $C_2$-$C_4$ Alkylcellulosen oder Hydroxyalkylcellulosen in Kombination mit 0,02 bis 10 Gew.% (bezogen auf den Kautschuk) eines wasserlöslischen Alkali-, Erdalkali-, Aluminium- oder Zinksalzes verwendet Auch hier wird als bevorzugtes wasserlösliches Salz Natriumchlorid eingesetzt. Das Koagulat wird mechanisch abgetrennt, gegebenenfalls mit Wasser gewaschen und das restliche Wasser entzogen. Auch hier wird ausgeführt, dass die Fremdstoffe wie in der DE-OS 23 32 096 zusammen mit dem Wasser beim Abtrennen des Koagulats faktisch vollständig entfernt werden, und etwa noch verbleibende Reste durch das Waschen mit weiterem Wasser vollständig ausgewaschen werden.

In US 5,708,132 (Goodyear) wird ein Verfahren zur Aufarbeitung von Nitrilkautschuklatices beschrieben, der eine verbesserte Lagerstabilität (70°C/28 Tage) und eine höhere Ausvulkanisationsgeschwindigkeit (TC90) aufweist.

Für die Latexkoagulation werden Mischungen von Salzen und Säuren, insbesondere Schwefelsäure eingesetzt. Das Verfahren zeichnet sich durch die Einhaltung eines engen pH-Bereichs bei der Krümelwäsche aus, wobei der pH-Wert des Waschwassers im Bereich 5 bis 8, bevorzugt 5,5 bis 7,5, besonders bevorzugt 6 bis 7 liegt. Zur pH-Einstellung werden Calciumhydroxid, Magnesiumhydroxid und Natriumhydroxid verwendet, wobei die Verwendung von Natriumhydroxid bevorzugt ist. Zur Stabilisierung des Nitrilkautschuks wird ein Alterungsschutzmittel auf der Basis von alkylierten Arylphosphiten, insbesondere von alkylierten Arylphosphiten in Kombination mit sterisch gehinderten Phenolen verwendet. Nach der Wäsche werden die Kautschukkrümel in einem Schneckenaggregat auf Restfeuchten von 7 bis 10 Gew. % entwässert und anschließend thermisch getrocknet

In DE-OS 27 51 786 wird festgestellt, dass die Ausfällung und Isolierung von Kautschuken aus ihren wässrigen Dispersionen mit einer geringeren Menge an **(Hydroxy)AlkyleeHulose** durchgeführt werden kann, wenn 0,02 bis 0,25 Gew.% eines wasserlöslichen **Calciumsalzes** eingesetzt werden. Es wird wiederum als Vorteil beschrieben, dass nach diesem Verfahren ein extrem reines Koagulat erhalten wird, welches von Fremdbestandteilen, wie Emulgatoren, Katalysatorresten und dergleichen faktisch vollständig frei ist. Diese Fremdstoffe werden zusammen mit dem Wasser beim Abtrennen des Koagulats entfernt und etwa noch verbleibende Reste können mit Wasser ausgewaschen werden. Es wird ferner ausgeführt, dass die Eigenschaften der isolierten Kautschuke nicht nachteilig dadurch beeinflusst werden, falls mit einem Calcium-Salz koaguliert wird. Man erhalte vielmehr einen Kautschuk, bei dem die Vulkanisateigenschaften nicht beeinträchtigt und voll zufriedenstellend seien. Dies wird als überraschend dargestellt, da eine Beeinträchtigung der Kautschukeigenschaften häufig zu beobachten sei, wenn Polymere aus Dispersionen mit Hilfe mehrwertiger Metallionen wie Calcium- oder Aluminium-Ionen ausgefällt würden. Als Beleg für die letztere Aussage wird Houben-Weyl (1961), Methoden der Org. Chemie, Makromolekulare Stoffe 1, S. 484/485 herangezogen. Die Kautschuke der DE-OS 27 51 786 wiesen demgegenüber keinerlei Verzögerung oder Verschlechterung z.B. bei der Anvulkanisation und/oder Ausvulkanisation auf.

Keiner der Schriften DE-OS 23 32 096, DE-OS 24 25 441 und DE-OS 27 51 786 ist zu entnehmen, welche Maßnahmen zwecks Erreichen einer raschen Vulkanisation und guter Vulkanisateigenschaften getroffen werden müssen.

Wie bei den zuvor beschriebenen Patenten ist es auch das Ziel der DE-OS 30 43 688, die für die Latexkoagulation nötigen Elektrolytmengen möglichst stark zu reduzieren. Dies wird gemäß der Lehre von DE-OS 30 43 688 erreicht, indem man bei der Elektrolytkoagulation von Latices neben dem anorganischen Coagulans als Hilfsmittel entweder auf Pflanzen zurückgehende proteinartige Materialien oder Polysaccharide wie z.B. Stärke und gegebenenfalls wasserlösliche Polyaminverbindungen verwendet. Als anorganische Coagulantien werden bevorzugt Alkalimetall- oder Erdalkalimetallsalze beschrieben. Durch die speziellen Additive gelingt eine Reduktion der für eine quantitative Latexkoagulation notwendigen Salzmengen. Aus DE-OS 3 043 688 sind keine Hinweise zu entnehmen, wie durch die Herstellung und/oder Aufarbeitung des Nitrilkautschuks eine schnelle Vulkanisation- erreicht werden kann.

Gemäß US-A-2,487,263 wird die Latexkoagulation von Styrol/Butadien-Kautschuk nicht unter Einsatz von Metallsalzen durchgeführt, sondern mit Hilfe einer Kombination von Schwefelsäure mit Gelatine ("glue"). Menge und Konzentration der Schwefelsäure sind dabei so zu wählen, dass der pH des wässrigen Mediums auf einen Wert < 6 eingestellt wird. Als vorteilhaft wird ausgeführt, dass sich bei der Latexkoagulation diskrete, nicht zusammenhängende Kautschukkrümel bilden, die gut abfiltriert werden können und sich gut waschen lassen. Styrol/Butadien-Kautschuk, der nach der Lehre von US-A-2,487,263 erhalten wird, weist ein geringeres Wasserabsorptionsvermögen, einen niedrigeren Aschegehalt und einen höheren elektrischen Widerstand als Kautschuke auf, die mit Hilfe von Metallsalzen koaguliert werden. US-A-2,487,263 enthält keinerlei Offenbarung, welche Auswirkungen die Koagulation mit Schwefelsäure und Gelatinezusatz auf Lagerstabilität, Vulkanisationsgeschwindigkeit und Vulkanisateigenschaften insbesondere auf das Modulniveau von Kautschuken besitzt. In eigenen Versuchen wurde gefunden, dass die Lagerstabilität der auf diese Weise erhaltenen Nitrilkautschuke nicht ausreichend ist.

In der US-A-4,920,176 wird beschrieben und durch experimentelle Daten belegt, dass bei Koagulation eines Nitrilkautschuk-Latex gemäß dem Stand der Technik unter Einsatz anorganischer Salze wie Natriumchlorid oder Calciumchlorid sehr hohe Natrium-, Kalium- und Calcium-Gehalte erhalten werden. Darüber hinaus verbleiben auch deutliche Mengen an Emulgator im Nitrilkautschuk. Dies ist unerwünscht und zwecks signifikanter Reduktion der im Nitrilkautschuk verbleibenden Salzmengen werden gemäß US-A-4,920,176 bei der Koagulation von Nitrilkautschuk-Latices anstelle der anorganischen Salze wasserlösliche kationische Polymere eingesetzt. Bei den wasserlöslichen kationischen Polymeren handelt es sich beispielsweise um solche auf der Basis von Epichlorhydrin und Dimethylamin. Die daraus erhaltenen Vulkanisate weisen eine niedrigere Quellung bei Wasserlagerung sowie einen höheren elektrischen Widerstand auf. In der Patentschrift werden die genannten Eigenschaftsverbesserungen rein qualitativ auf die minimalen, im Produkt verbleibenden Kationengehalte zurückgeführt. Eine weitergehende Erklärung der beobachteten Phänomene wird nicht gegeben. Auch wird in US-A-4,920,176 keinerlei Aussage getroffen, ob und wie durch Herstellung und Aufarbeitung des Nitrilkautschuks das Vulkanisationsverhalten und das Modulniveau gesteuert werden können.

Das Ziel der EP-A-1 369 436 besteht darin, Nitrilkautschuke mit hoher Reinheit bereitzustellen. Zur Herstellung der Nitrilkautschuke wird die Emulsionspolymerisation in Gegenwart von Fettsäure- und/oder Harzsäuresalzen als Emulgatoren durchgeführt, danach die Latexkoagulation durch Säurezusatz bei pH Werten kleiner gleich 6 vorgenommen, gegebenenfalls unter Zugabe von Fällungsmitteln. Als Säuren können alle mineralischen und organischen Säuren verwendet werden, die es gestatten, den gewünschten pH-Wert einzustellen. Als zusätzliche Fällungsmittel können beispielsweise Alkalisalze von anorganischen Säuren eingesetzt werden. Erwähnt wird ferner, dass auch Fällungshilfsmittel wie Gelatine, Polyvinylalkohol, Cellulose, carboxylierte Cellulose und kationische sowie anionische Polyelektrolyte oder deren Mischungen zugesetzt werden können. Anschließend werden die dabei entstandenen Fett- und Harzsäuren mit wässrigen Alkalihydroxidlösungen ausgewaschen und das Polymer abschließend einer Scherung unterworfen, bis sich eine Restfeuchte von kleiner gleich 20 % einstellt. Erhalten werden Nitrilkautschuke mit sehr geringen Restemulgatorgehalte sowie geringen Kationengehalte in Form der Natrium-, Kalium-, Magnesium- und Calcium-Gehalte. Die EP-A-1 369 436 liefert keine Hinweise zur gezielten Herstellung von Nitrilkautschuken, die eine rasche Vulkanisation und nach der Vulkanisation ein hohes Modulniveau aufweisen, Insbesondere enthält EP-A-1 369 436 keinerlei Anhaltspunkte dafür, durch welche Faktoren (wie zB, den Gehalt an verschiedenen Kationen) die gesamte Vulkanisationsgeschwindigkeit, das Eigenschaftsprofil und dabei vor allem das Modulniveau und die Lagerstabilität beeinflusst werden.

In EP-A-0 692 496, EP-A-0 779 301 und EP-A-0 779 300 werden jeweils Nitrilkautschuke auf Basis eines ungesättigten Nitrils und eines konjugierten Diens beschrieben. Gemeinsam ist allen Nitrilkautschuken, dass sie 10-60 Gew.% ungesättigtes Nitril und eine Mooney-Viskosität im Bereich von 15-150 bzw. gemäß EP-A-0 692 496 von 15-65 besitzen und alle mindestens 0,03 mol einer $C_{12}$-$C_{16}$-Alkylthio-Gruppe pro 100 mol Monomer-Einheiten aufweisen, wobei diese Alkylthiogruppe mindestens drei tertiäre C-Atome einschließt und ein Schwefel-Atom, das direkt an mindestens eines der tertiären C-Atome gebunden ist.

Die Herstellung der Nitrilkautschuke erfolgt jeweils in Gegenwart eines entsprechend aufgebauten $C_{12}$-$C_{16}$-Alkylthiols als Molekulargewichtsregler, der als "Chain transfer agent" fungiert und somit als Endgruppe in die Polymerketten eingebaut wird.

Für die Nitrilkautschuke gemäß EP-A-0 779 300 wird ausgeführt, dass sie eine Breite "ΔAN" (AN steht für Acrylnitril) der Zusammensetzungsverteilung des ungesättigten Nitrils im Copolymer im Bereich von 3 bis 20 besitzen. Das Verfahren zu ihrer Herstellung unterscheidet sich von dem der EP-A-0 692 496 dadurch, dass nur 30-80 Gew. % der gesamten Monomermenge zu Polymerisationsbeginn eingesetzt werden und die restliche Monomermenge erst bei einem Umsatz der Polymerisation von 20-70 Gew. % zudosiert wird.

Für die Nitrilkautschuke gemäß EP-A-0 779 301 wird ausgeführt, dass sie 3-20 Gew. % einer Fraktion mit niedrigem Molekulargewicht mit einem zahlenmittleren Molekulargewicht $M_n$ kleiner 35.000 aufweisen. Das Verfahren zu ihrer Herstellung unterscheidet sich von dem der EP-A-0 692 496 dadurch, dass nur 10-95 Gew.% des Arylthiols vor der Polymerisation in das Monomerengemisch eingemischt werden und die restliche Menge des Alkylthiols erst bei Erreichen-eines Polymerisationsumsatzes von 20-70 Gew.% zudosiert wird.

Im Hinblick auf die Latex-Koagulation wird in allen drei Patentanmeldungen EP-A-0 692 496, EP-A-0 779 301 und EP-A-0 779 300 ausgeführt, dass beliebige Coagulantien eingesetzt werden können. Als anorganische Coagulantien werden Calciumchlorid, Aluminiumsulfat und Natriumchlorid eingesetzt.

In Vergleichsbeispiel 6 der EP-A-779 300 bzw. Vergleichsbeispiel 7 der EP-A-0 779 301 wird die Latexkoagulation mit einer Mischung von NaCl und $CaCl_2$ durchgeführt, wobei das $CaCl_2$ in großen Mengen eingesetzt wird und das Gewichtsverhältnis von NaCl und $CaCl_2$ 1 : 0,75 beträgt. Bezüglich der Scorchzeit und des Spannungswerts bei 100% Dehnung werden im Vergleich zu den anderen in der jeweiligen Tabelle 12 bzw. 13 aufgeführten Beispielen keine signifikanten Unterschiede gefunden.

Für die Herstellung der Nitrilkautschuke ist es gemäß EP-A-0 692 496, EP-A-0 779 300 sowie EP-A-0 779 301 essentiell, dass als Molekulargewichtsregler Alkylthiole in Form der Verbindungen 2,2,4,6,6-Pentmethylheptan-4-thiol und 2,2,4,6,6,8,8-Heptamethylnonan-4-thiol eingesetzt werden. Hierbei wird deutlich darauf hingewiesen, dass bei Einsatz des herkömmlichen bekannten tert. Dodecylmercaptans als Regler Nitrilkautschuke mit schlechteren Eigenschaften erhalten werden.

Für die in EP-A-0 692 496, EP-A-0 779 300 sowie EP-A-0 779 301 hergestellten Nitrilkautschuke wird geltend gemacht, dass sie ein vorteilhaftes Eigenschaftsprofil besitzen, eine gute Verarbeitbarkeit der Kautschukmischungen und eine niedrige Formverschmutzung bei der Verarbeitung ermöglichen. Die erhaltenen Vulkanisate sollen eine gute Kombination von Tieftemperatur- und Ölbeständigkeit besitzen und über gute mechanische Eigenschaften verfügen. Geltend gemacht wird ferner, dass bei der Herstellung der Nitrilkautschuke durch hohe Polymerisationsumsätze von größer 75%, bevorzugt größer 80% eine hohe Produktivität erzielt werden kann und auch die Vulkanisationsgeschwindigkeit bei der Vulkanisation mit Schwefel bzw. Peroxiden hoch ist, insbesondere bei NBR-Typen für die Spritzgussverarbeitung. Es wird ferner ausgeführt, dass die Nitrilkautschuke eine kurze Anvulkanisationszeit aufweisen und eine hohe Vernetzungsdichte. Als Beleg für die rasche Vulkanisation der gemäß EP-A-0 692 496, EP-A- 0 779 300 und EP-A-0 779 301 hergestellten Nitrilkautschuke wird die Anvulkanisationszeit (die sogenannte "Scorch time" (gemessen als "$T_5$") herangezogen, die allerdings lediglich ein Maß für die Anvulkanisationsgeschwindigkeit darstellt. Über die gesamte Vulkanisationsgeschwindigkeit und wie diese gegebenenfalls zu beeinflussen ist, werden keinerlei Aussagen getroffen. Die Vernetzungsdichte wird nur durch Angabe des Maximum Torque Werts (gemessen als $V_{max}$) beschrieben.

In der Praxis sind kurze Scorchzeiten nicht durchgängig erwünscht, da die entsprechenden Kautschukmischungen aufgrund einer solchen schnellen Anvulkanisation nicht verarbeitungssicher sind. Insbesondere im Spritzgussverfahren ist eine rasche Anvulkanisation nicht ausreichend. Entscheidend für eine wirtschaftliche Verarbeitung ist die Einstellung kurzer Zykluszeiten. Für kurze Zykluszeiten ist jedoch die Differenz von Ausvulkanisations- und Anvulkanisationsgeschwindigkeit entscheidend. Diese wird als "$t_{90}$-$t_{10}$" gemessen, wobei $t_{90}$ die Zeit ist, zu der 90% der Endvulkanisation und $t_{10}$ die Zeit, zu der 10 % der Endvulkanisation stattgefunden haben. Durch Verwendung der in der EP-A-0 692 496, EP-A-0 779 300 **und** EP-A-0 779 301 eingesetzten Regler 2,2,4,6,6-Pentmethylheptan-4-thiol und 2,2,4,6,6,8,8-Heptamethylnonan-4-thiol ist jedoch die Einstellung einer raschen Vulkanisationscharakteristik sowie die Einstellung eines hohen Modulniveaus nicht zwangsläufig möglich.

In der EP-A-0 692 496 wird hierzu unter anderem angeführt, dass zur Einstellung hoher Vulkanisationsgeschwindigkeiten schon viele Methoden vorgeschlagen wurden, wie z. B. die Verwendung minimaler Mengen an Emulgatoren und Fällmitteln, so dass nur minimale Mengen der Emulgatoren und Fällmittel im NBR verbleiben.

In drei noch nicht veröffentlichten Patentanmeldungen mit den Aktenzeichen DE 102007024011, DE 102007024008 und DE 102007024010 werden Nitrilkautschuke beschrieben, die besondere Eigenschaften aufweisen.

In DE 102007024011 wird ein schnell vulkanisierender Nitrilkautschuk mit guten mechanischen Eigenschaften, insbesondere einem hohen Modul 300 - Niveau, beschrieben, der eine Ionenkennzahl ("IKZ") der allgemeinen Formel (I) im Bereich von 7-26 ppm x mol/g besitzt. Die Ionenkennzahl ist folgendermaßen definiert:

$$\text{Ionenkennzahl} = \frac{3\,c\,(Ca^{2+})}{40\text{ g/mol}} - \left[ \frac{c\,(Na^+)}{23\text{ g/mol}} + \frac{c\,(K^+)}{39\text{ g/mol}} \right] \qquad \text{(I)}$$

wobei $c(Ca^{2+})$, $c(Na^+)$ und $c(K^+)$ die Konzentration der Calcium-, Natrium- und Kalium-Ionen im Nitrilkautschuk in ppm angibt. Die in den Beispielen genannten, erfindungsgemäß hergestellten Nitrilkautschuke weisen Ca-Ionen-Gehalte im Bereich von 325-620 ppm und Mg-Ionen-Gehalte im Bereich von 14-22 ppm auf. Die nicht erfindungsgemäßen Nitrilkautschuke der Beispiele weisen Ca-Ionen-Gehalte im Bereich 540-1290 ppm und Mg-Ionen-Gehalte von 2-34 ppm auf. Um einen solchen schnell vulkanisierenden Nitrilkautschuk zu erhalten, wird die Koagulation in Gegenwart eines Salzes eines 1-wertigen Metalls und gleichzeitig von maximal 5 Gew.% eines Salzes eines 2-wertigen Metalls durchgeführt und die Temperatur bei Koagulation und nachfolgender Wäsche beträgt mindestens 50°C.

In der DE 102007024008 wird ein besonders lagerstabiler Nitrilkautschuk beschrieben, der 2,2,4,6,6-Pentamethylheptan-4-thio- und/oder 2,4,4,6,6-Pentamethylheptan-2-thio- und/oder 2,3,4,6,6-Pentamethylheptan-2-thio und/oder 2,3,4,6,6-Pentamethylheptan-3-thio-Endgruppen enthält und einen Caleium-Ionen-Gehalt von mindestens 150 ppm, bevorzugt > 200 ppm bezogen auf den Nitrilkautschuk, und einen Chlor-Gehalt von mindestens 40 ppm, bezogen auf den Nitrilkautschuk, aufweist. Die Ca-Ionen-Gehalte der in den erfindungsgemäßen Beispielen hergestellten Nitrilkautschuke betragen 171 -1930 ppm, die Mg-Gehalte liegen in einem Bereich von 2 bis 265 ppm. Die Ca-Ionen-Gehalte der nicht erfindungsgemäßen Vergleichsbeispiele betragen 2-25 ppm, die Mg-Ionen-Gehalte der nicht erfindungsgemäßen Vergleichsbeispiele 1-350 und der erfindungsgemäßen Beispiele 2 bis 265 ppm. Ein solcher lagerstabiler Nitrilkautschuk wird erhalten, wenn man die Latex-Koagulation in Gegenwart mindestens eines Salzes auf Basis von Aluminium, Calcium, Magnesium, Kalium, Natrium oder Lithium durchführt, Koagulation oder Wäsche in Gegenwart eines Ca-Salzes oder von Ca-Ionen haltigem Waschwasser und in Gegenwart eines Cl-haltigen Salzes durchführt.

In der DE 102007024010 wird ein weiterer schnell vulkanisierender Nitrilkautschuk beschrieben, der eine Ionenkennzahl ("IKZ") der allgemeinen Formel (II) im Bereich von 0 - 60, bevorzugt 10 - 25 ppm x mol/g aufweist,

$$IKZ = 3 \left[ \frac{c\,(Ca^{2+})}{40\text{ g/mol}} + \frac{c\,(Mg^{2+})}{24\text{ g/mol}} \right] - \left[ \frac{c\,(Na^+)}{23\text{ g/mol}} + \frac{c\,(K^+)}{39\text{ g/mol}} \right] \qquad \text{(II)}$$

wobei $c(C_2^+)$, $c(Mg^{2+})$, $c(Na^+)$ und $c(K^+)$ die Konzentration der Calcium-, Magnesium-, Natrium- und Kalium-Ionen im Nitrilkautschuk in ppm angibt, und der Mg-Ionen-Gehalt bei 50-250 ppm bezogen auf den Nitrilkautschuk liegt. In den Beispielen für die erfindungsgemäß hergestellten Nitrilkautschuke liegt der Ca-Ionen-Gehalt $c(Ca^{2+})$ im Bereich von 163 - 575 ppm und der Mg-Ionen-Gehalt $c(Mg^{2+})$ im Bereich von 57 - 64 ppm. In den Beispielen für nicht erfindungsgemäße Nitrilkautschuke liegt der Ca-Ionen-Gehalt $c(Ca^{2+})$ im Bereich von 345 - 1290 ppm und der Mg-Ionen-Gehalt $c(Mg^{2+})$ im Bereich von 2 - 440 ppm. Für den Erhalt derartiger Nitrilkautschuke muss die Latexkoagulation unter Einhaltung besonderer Maßnahmen durchgeführt werden. Insbesondere wird der Latex vor der Koagulation mit einem Magnesium-Salz auf eine Temperatur von kleiner 45°C eingestellt.

Zusammenfassend ist festzustellen, dass trotz des bereits vorhandenen Standes der Technik noch weiterer Optimierungsbedarf für die Latexkoagulation und Bedarf an verbesserten Nitrilkautschuken besteht

Die **Aufgabe der vorliegenden Erfindung** bestand somit darin, die Koagulation von Nitrilkautschuklatices mit niedrigen Fällmittelmengen durchzuführen, so dass eine quantitative Latexfällung ohne Feinanteile gelingt (d.h. unter Erhalt eines klaren Serums). Gewünscht war ferner, dass hierbei keine zu großen Kautschukkrümel (ohne Latex- bzw. Fällmitteleinschlüsse) entstehen und die im Produkt verbleibenden Emulgatormengen gering sind (gleichbedeutend mit einer hohen CSB-Fracht im Latexserum und im Abwasser). Die Aufgabe bestand ferner darin, einen Nitrilkautschuk bereitzustellen, der nicht nur lagerstabil ist, sondern auch gleichzeitig eine hohe Vulkanisationsgeschwindigkeit aufweist, insbesondere niedrige Differenzen von Ausvulkanisations- und Anvulkanisationsgeschwindigkeit ($t_{90}$-$t_{10}$), und gute mechanische Eigenschaften, insbesondere ein hohes Modulniveau.

Es wurde überraschenderweise gefunden, dass man Nitrilkautschuke mit einer guten Lagerstabilität und einer gleichzeitig hohen Vulkanisationsgeschwindigkeit ($t_{90}$-$t_{10}$) sowie hervorragenden Vulkanisateigenschaften erhält, wenn diese einen speziellen Gehalt an Calcium- und Magnesium-Ionen aufweisen.

**Gegenstand der vorliegenden Erfindung** ist somit ein Nitrilkautschuk, welcher Wiederholungseinheiten mindestens eines $\alpha$,$\beta$-ungesättigten Nitrils, mindestens eines konjugierten Diens und gegebenenfalls eines oder mehrerer weiterer copolymerisierbarer Monomere enthält und der Magnesium-Ionen in einer Konzentration im Bereich von 100 - 180 ppm und Calcium-Ionen in einer Konzentration im Bereich von 50-145 ppm, jeweils bezogen auf den Nitrilkautschuk aufweist.

Diese erfindungsgemäßen Nitrilkautschuke besitzen eine exzellente Lagerstabilität, ermöglichen gleichzeitig eine hohe Vulkanisationsgeschwindigkeit (gekennzeichnet durch die Differenz von Ausvulkanisations- und Anvulkanisationszeit ($t_{90}$-$t_{10}$)) und weisen gute Vulkanisateigenschaften, insbesondere ein hohes Niveau der Modulwerte, auf.

Derartige Nitrilkautschuke sind bisher aus dem Stand der Technik nicht bekannt.

**Bestimmung der Kationengehalte**

Für die Bestimmung der Kationengehalte gemäß vorliegender Erfindung hat sich folgende Methode bewährt und wird eingesetzt: Es werden 0,5 g des Nitrilkautschuks durch trockene Veraschung bei 550°C im Platintiegel mit anschliessendem Lösen der Asche in Salzsäure aufgeschlossen. Nach geeigneter Verdünnung der Aufschlusslösung mit deionisiertem Wasser lassen sich die Metallgehalte durch ICP-OES (inductively coupled plasma - optical emission spectrometry) bei folgenden Wellenlängen:

| | |
|---|---|
| Calcium: | 317,933 nm, |
| Kalium: | 766,491 nm, |
| Magnesium: | 285,213 nm |
| Natrium: | 589,592 nm |

gegen mit Säurematrix angepasste Kalibrierlösungen bestimmen. Je nach Konzentration der Elemente in der Aufschlusslösung bzw. Empfindlichkeit des verwendeten Messgeräts werden die Konzentrationen der Probelösungen für die jeweils verwendeten Wellenlängen an den linearen Bereich der Kalibrierung angepasst **(B. Welz "Atomic Absorption Spectrometry", 2nd Ed., Verlag Chemie, Weinheim 1985)**

Die erfindungsgemäßen Nitrilkautschuke besitzen eine Konzentration der Magnesium-Ionen $c(Mg^{2+})$ im Bereich von 100 - 180 ppm, bevorzugt im Bereich von 100-170 und eine Konzentration der Ca-Ionen $c(Ca^{2+})$ im Bereich von 50-145 ppm, bevorzugt 55-120 ppm, jeweils bezogen auf den Nitrilkautschuk.

In einer bevorzugten Ausführungsform besitzen die erfindungsgemäßen Nitrilkautschuke eine Ionenkennzahl ("IKZ") der nachfolgend dargestellten allgemeinen Formel (1) im Bereich von 5-30 ppm x mol/g, besonders bevorzugt von 10-25 ppm x mol/g

$$IKZ = 3 \left[ \frac{c\,(Ca^{2+})}{40\ g/mol} + \frac{c\,(Mg^{2+})}{24\ g/mol} \right] - \left[ \frac{c\,(Na^+)}{23\ g/mol} + \frac{c\,(K^+)}{39\ g/mol} \right] \quad (1)$$

wobei $c(Ca^{2+})$, $c(Mg^2)$, $c(Na^+)$ und $c(K^+)$ die Konzentration der Calcium-, Magnesium-, Natrium- und Kalium-Ionen im Nitrilkautschuk in ppm angibt. Diese Konzentrationen der Calcium-, Magnesium-, Natrium- und Kalium-Ionen werden wie zuvor beschrieben bestimmt.

In der Ionenkennzahl gemäß der Formel (I) werden die Metall-Ionen-Gehalte durch die Atomgewichte der jeweiligen Metalle dividiert. Aus diesem Grund ist die Dimension der IKZ [ppm x Mol/g].

**Lagerstabilität eines Kautschuks**

Vorteilhafterweise besitzen die erfindungsgemäßen Nitrilkautschuke eine sehr gute Lagerstabilität und weisen nur noch wenige Verunreinigungen, insbesondere des bei der Polymerisation eingesetzten Emulgators auf, was sich in hohen CSB-Werten des Waschwassers widerspiegelt.

Unter Lagerstabilität eines Kautschuks versteht man eine möglichst weitgehende Konstanz des Molekulargewichts bzw. der Mooney-Viskosität über einen längeren Zeitraum und dies insbesondere auch bei höheren Temperaturen.

Man bestimmt die Lägerstabilität üblicherweise, indem man den unvulkanisierten Nitrilkautschuk über einen definierten Zeitraum bei höherer Temperatur lagert (auch als Heißluftlagerung bezeichnet) und die Differenz der Mooney-Viskositäten vor und nach dieser Lagerung bei erhöhter Temperatur bestimmt. Da die Mooney-Viskotät von Nitrilkautschuk üblicherweise bei der Heißlußlagerung zunimmt, erfolgt die Charakterisierung der Lagerstabilität durch die Differenz der Mooney-Viskosität nach Lagerung minus Mooney-Viskosität vor Lagerung.

Die Lagerstabilität "LS" ergibt sich somit über die folgende Formel (II)

$$LS = MV2 - MV1 \qquad (II)$$

worin

MV1    den Wert für die Mooney-Viskosität eines Nitrilkautschuks und

MV2    den Wert für die Mooney-Viskosität desselben Nitrilkautschuks nach einer 48 stündigen Lagerung bei 100°C darstellt.

Die Bestimmung der Werte für die Mooney-Viskosität (ML 1+4@100°C) erfolgt jeweils mittels eines Scherscheibenviskosimeters nach DIN 53523/3 bzw. ASTM D 1646 bei 100°C.

Es hat sich bewährt, die 48 stündige Lagerung des erfindungsgemäßen Nitrilkautschuks bei 100°C in einem Umlufttrockenschrank durchzuführen, wobei der Sauerstoffgehalt in diesem Umlufttrockenschrank gegenüber normaler Luft unverändert ist.

Ausreichend lagerstabil ist ein Nitrilkautschuk, wenn die Lagerstabilität LS maximal 5 Mooney-Einheiten beträgt. Bevorzugt ist LS kleiner 5 Mooney-Einheiten, besonders bevorzugt maximal 4 Mooney-Einheiten.

**Verunreinigungen im Nitrilkautschuk**

Die im Nitrilkautschuk verbleibende Emulgatormenge wird indirekt durch Bestimmung der nach der Latexkoagulation in der wässrigen Phase enthaltenen lösliche organische Bestandteile bestimmt. Als Maß hierfür wird der CSB (Chemischer Sauerstoffbedarf) nach DIN 38 409, Teil 41, H 41-1 und H 41-2 des Latexserums verwendet. Bei der CSB-Bestimmung werden organische Bestandteile mit stark schwefelsaurem Kaliumdichromat in Gegenwart eines Silbersulfatkatalysators quantitativ oxidiert. Anschließend wird die Menge an nicht umgesetztem Kaliumdichromat mit Eisen(II)-Ionen zurücktitriert. Der CSB-Wert wird in der DIN-Norm in der Dimension mg Sauerstoff/ Liter Lösung bzw. in der Dimension g Sauerstoff Liter Lösung angegeben. Zur besseren Vergleichbarkeit von Versuchen, bei denen Latices unterschiedlicher Feststoffkonzentration bzw. unterschiedliche Volumina von Fällmitteln eingesetzt werden, wird der CSB Wert des Serums auf die Masse des Nitrilkautschuks bezogen. In diesem Fall hat der CSB-Wert die Dimension $g_{Sauerstoff} / kg_{NBR}$. Man erhält diesen Wert auf folgende Weise:

$$CSB_{NBR} = \frac{CSB_{Serum} \times (m_{Serum} + m_{FM})}{m_{NBR}}$$

$$CSB_{NBR} = \frac{CSB_{Serum} \times (1 - FS/100 + m_{FM})}{FS/100}$$

es bedeuten:

$CSB_{NBR}$:    CSB bezogen auf 1 kg NBR [$g_{Sauerstoff} / kg_{NBR}$]

$CSB_{Serum}$:    CSB des Serums (experimentell bestimmt) [$g_{Sauerstoff} / kg_{Serum}$]

$m_{Serum}$:      Masse des Serums in 1 kg Latex [kg]

$m_{FM}$:      Masse des eingesetzten Fällmittels [kg/ $kg_{Latex}$)

$m_{NBR}$:      Masse des Nitrilkautschuks in 1 kg Latex [kg]

FS:      Feststoffgehalt des Latex [Gew. %]

Der CSB-Wert ist ein Maß für die Menge der nach der Latexkoagulation im Latexserum enthaltenen niedermolekularen Bestandteile, insbesondere der bei der Polymerisation eingesetzten Emulgatoren. Je höher bei Koagulationsversuchen, bei denen man von identischen Latices ausgeht, der CSB-Wert bezogen auf NBR ist, umso niedriger ist der Gehalt an Emulgatoren und sonstigen Verunreinigungen im Nitrilkautschuk.

## Erfindungsgemäßen Nitrilkautschuke

Die erfindungsgemäßen Nitrilkautschuke weisen Wiederholungseinheiten mindestens eines $\alpha,\beta$-ungesättigten Nitrils, mindestens eines konjugierten Diens und gegebenenfalls von einem oder mehreren weiteren copolymerisierbaren Monomeren auf.

Das konjugierte Dien kann von jeder Natur sein. Bevorzugt werden ($C_4$-$C_6$)-konjugierte Diene eingesetzt. Besonders bevorzugt sind 1,3-Butadien, Isopren, 2,3-Dimethylbutadien, Piperylen, 1,3-Pentadien oder Mischungen daraus. Insbesondere bevorzugt sind 1,3-Butadien und Isopren oder Gemische daraus. Ganz besonders bevorzugt ist 1,3-Butadien.

Als $\alpha,\beta$-ungesättigtes Nitril kann jedes bekannte $\alpha,\beta$-ungesättigte Nitril eingesetzt werden, bevorzugt sind ($C_3$-$C_5$)-$\alpha,\beta$-ungesättigte Nitrile wie Acrylnitril, Methacrylnitril, 1-Chloracrylnitril, Ethacrylnitril oder Mischungen davon. Besonders bevorzugt ist Acrylnitril.

Ein besonders bevorzugter Nitrilkautschuk ist somit ein Copolymer aus Acrylnitril und 1,3-Butadien.

Neben dem konjugierten Dien und dem $\alpha,\beta$-ungesättigten Nitril können noch ein oder mehrere weitere copolymerisierbare Monomere eingesetzt werden, z.B. $\alpha,\beta$-ungesättigte Mono- oder Dicarbonsäuren, deren Ester oder Amide.

Als $\alpha,\beta$-ungesättigte Mono- oder Dicarbonsäuren können beispielsweise Fumarsäure, Maleinsäure, Acrylsäure, Methacrylsäure, Crotonsäure und Itakonsäure verwendet werden. Bevorzugt sind dabei Maleinsäure, Acrylsäure, Methacrylsäure und Itakonsäure. Solche Nitrilkautschuke werden üblicherweise auch als carboxylierte Nitrilkautschuke, oder abgekürzt auch als "XNBR" bezeichnet.

Als Ester der $\alpha,\beta$-ungesättigten Carbonsäuren werden beispielsweise Alkylester, Alkoxyalkylester, Hydroxyalkylester oder Mischungen daraus eingesetzt.

Besonders bevorzugte Alkylester der $\alpha,\beta$-ungesättigten Carbonsäuren sind Methyl(meth)acrylat, Ethyl(meth)acrylat, Propyl(meth)acrylat, n-Butyl(Meth)acrylat, t-Butyl(meth)acrylat, Hexyl(meth)-acrylat, 2-Ethlyhexyl(meth)acrylat, Octyl(meth)acrylat und Lauryl(meth)acrylat. Insbesondere wird n-Butylacrylat eingesetzt.

Besonders bevorzugte Alkoxyalkylester der $\alpha,\beta$-ungesättigten Carbonsäuren sind Methoxyethyl(meth)acrylat, Ethoxyethyl(meth)acrylat und Methoxyethyl(meth)acrylat. Insbesondere wird Methoxyethylacrylat eingesetzt.

Besonders bevorzugte Hydroxyalkylester der $\alpha,\beta$-ungesättigten Carbonsäuren sind Hydroxyethyl(meth)acrylat, Hydroxypropyl(meth)acrylat und Hydroxy(butyl(meth)acrylat.

Als Ester der $\alpha,\beta$-ungesättigten Carbonsäuren werden ferner beispielsweise Polyethylenglykol(meth)acrylat, Polypropylenglykol(meth)acrylat, Glycidyl(meth)acrylat, Epoxy(meth)acrylat und Urethan(meth)acrylat eingesetzt.

Weitere mögliche Monomere sind Vinylaromaten wie Styrol, $\alpha$-Methylstyrol und Vinylpyridin.

Die Anteile an konjugiertem Dien und $\alpha,\beta$-ungesättigtem Nitril in den erfindungsgemäßen Nitrilkautschuken können in weiten Bereichen variieren. Der Anteil des oder der Summe der konjugierten Diene liegt üblicherweise im Bereich von 20 bis 95 Gew.%, bevorzugt im Bereich von 40 bis 90 Gew.%, besonders bevorzugt im Bereich von 60 bis 85 Gew. %, bezogen auf das Gesamtpolymer. Der Anteil des oder der Summe der $\alpha,\beta$-ungesättigten Nitrile liegt üblicherweise bei 5 bis 80 Gew.%, bevorzugt bei 10 bis 60 Gew.%, besonders bevorzugt bei 15 bis 40 Gew.%, bezogen auf das Gesamtpolymer. Die Anteile der Monomere summieren sich jeweils zu 100 Gew.% auf.

Die zusätzlichen Monomere können in Mengen von 0 bis 40 Gew.%, bevorzugt 0,1 bis 40 Gew.%, besonders bevorzugt 1 bis 30 Gew.%, bezogen auf das Gesamtpolymer, vorliegen. In diesem Fall werden entsprechende Anteile des oder der konjugierten Diene und/oder des oder der $\alpha,\beta$-ungesättigten Nitrile durch die Anteile dieser zusätzlichen Monomere ersetzt, wobei sich die Anteile aller Monomere weiterhin jeweils zu 100 Gew.% aufsummieren.

Werden als zusätzliche Monomere Ester der (Meth)acrylsäure eingesetzt, so erfolgt dies üblicherweise in Mengen von 1 bis 25 Gew. %.

Werden als zusätzliche Monomere $\alpha,\beta$-ungesättigte Mono- oder Dicarbonsäuren eingesetzt, so erfolgt dies üblicherweise in Mengen von weniger als 10 Gew. %.

Der Stickstoffgehalt wird in den erfindungsgemäßen Nitrükautschuken gemäß DIN 53 625 nach Kjeldahl bestimmt. Aufgrund des Gehalts an polaren Comonomeren sind die Nitrilkautschuke üblicherweise in Methylethylketon bei 20°C > 85 Gew.% löslich.

Die Nitrilkautschuke weisen üblicherweise Mooney-Viskositäten (ML (1+4 @100°C)) von 10 bis 150, vorzugsweise von 20 bis 100 Mooney Einheiten auf. Die Mooney-Viskosität (ML (1+4@100°C)) wird mittels eines Scherscheibenviskosimeters nach DIN 53523/3 bzw. ASTM D 1646 bei 100°C bestimmt.

Die Glastemperaturen der Nitrilkautschuke liegen üblicherweise im Bereich -70°C bis +10°C, vorzugsweise im Bereich -60°C bis 0°C.

Bevorzugt sind erfindungsgemäße Nitrilkautschuke, die Wiederholungseinheiten von Acrylnitril, 1,3-Butadien und gegebenenfalls von einem oder mehreren weiteren copolymerisierbaren Monomeren aufweisen. Ebenso bevorzugt sind Nitrilkautschuke, die Wiederholungseinheiten von Acrylnitril, 1,3-Butadien und einer oder mehreren $\alpha,\beta$-ungesättigten Mono- oder Dicarbonsäure, deren Estern oder Amiden aufweisen, und insbesondere Wiederholungseinheiten eines Alkylesters einer $\alpha,\beta$-ungesättigten Carbonsäuren, ganz besonders bevorzugt von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat oder Lauryl(meth)acrylat.

**Gegenstand der vorliegenden Erfindung** ist ferner ein Verfahren zur Herstellung von Nitrilkautschuken durch Emulsionspolymerisation mindestens eines $\alpha,\beta$-ungesättigten Nitrils, mindestens eines konjugierten Diens und gegebenenfalls eines oder mehrerer weiterer copolymerisierbarer Monomere in Gegenwart mindestens eines Molekulargewichtsreglers, wobei der bei der Polymerisation anfallende den Nitrilkautschuk enthaltende Latex einer Koagulation unterworfen und der koagulierte Nitrilkautschuk anschließend gewaschen wird, dadurch gekennzeichnet, dass

(i) der bei der Emulsionspolymerisation erhaltene Latex vor der Koagulation einen pH-Wert von mindestens 6 aufweist,
(ii) die Latexkoagulation unter Verwendung mindestens eines Magnesium-Salzes als Fällmittel durchgeführt wird, wobei optional bis zu 40 Gew.% des Magnesium-Salzes durch ein Calcium-Salz ersetzt sind,
(iii) Gelatine als Co-Fällmittel für die Latexkoagulation eingesetzt wird,
(iv) wobei die Temperatur des Latex vor dem Kontakt mit dem Co-Fällmittel (iii) auf eine Temperatur von maximal 50°C eingestellt wird und die Temperatur anschließend auf bis zu 100°C erhöht wird, und
(v) die Latexkoagulation und/oder Aufarbeitung des koagulierten Latex unter Einsatz von Calcium-Ionen haltigem Wasser durchgeführt wird, sofern die Koagulation in Abwesenheit eines Calcium-Salzes als Fällmittel durchgeführt wird.

Die Herstellung der Nitrilkautschuke erfolgt im erfindungsgemäßen Verfahren durch Emulsionspolymerisation.

Emulsionspolymerisationen werden unter Einsatz von Emulgatoren durchgeführt. Hierfür sind dem Fachmann eine große Bandbreite von Emulgatoren bekannt und zugänglich. Als **Emulgatoren** können beispielsweise anionische Emulgatoren oder auch neutrale Emulgatoren eingesetzt werden. Bevorzugt werden anionische Emulgatoren eingesetzt, besonders bevorzugt in Form wasserlöslicher Salze.

Als **anionische Emulgatoren** können modifizierte Harzsäuren eingesetzt werden, die durch Dimerisierung, Disproportionierung, Hydrierung und Modifikation von Harzsäuregemischen erhalten werden, die Abietinsäure, Neoabietinsäure, Palustrinsäure, Lävopimarsäure enthalten. Eine besonders bevorzugte modifizierte Harzsäure ist die disproportionierte Harzsäure (Ullmann's Encyclopedia of Industrial Chemistry, 6. Auflage, Band 31, S. 345-355).

Als **anionische Emulgatoren** können auch Fettsäuren eingesetzt werden. Diese enthalten 6 bis 22 C-Atome pro Molekül. Sie können voll gesättigt sein oder auch eine oder mehrere Doppelbindungen im Molekül enthalten. Beispiele für Fettsäuren sind Capronsäure, Laurinsäure, Myristinsäure, Palmitinsäure, Stearinsäure, Ölsäure, Linolsäure, Linolensäure. Die Carbonsäuren basieren üblicherweise auf herkunftsspezifischen Ölen oder Fetten wie z. B. Castoroil, Baumwollsaat, Erdnussöl, Leinsämenöl, Kokosnussfett, Palmkernöl, Olivenöl, Rapsöl, Sojabohnenöl, Fischöl und Rindertalg etc. (Ullmann's Encyclopedia of Industrial Chemistry, 6. Auflage, Band 13, S. 75-108). Bevorzugte Carbonsäuren leiten sich von der Kokosfettsäure und von Rindertalg ab und sind teil-bzw. vollhydriert.

Derartige Carbonsäuren auf Basis modifizierter Harzsäuren bzw. Fettsäuren werden als wasserlösliche Lithium-Natrium, Kalium und Ammoniumsalze verwendet. Die Natrium- und Kaliumsalze sind bevorzugt.

**Anionische Emulgatoren** sind ferner Sulfonate, Sulfate und Phosphate, die an einen organischen Rest gebunden sind. Als organischer Rest kommen aliphatische, aromatische, alkylierte Aromaten, kondensierte Aromaten, sowie methlyenverbrückte Aromaten infrage, wobei die methlyenverbrückten und kondensierten Aromaten zusätzlich alkyliert sein können. Die Länge der Alkylketten beträgt 6 bis 25 C-Atome. Die Länge der an die Aromaten gebundenen Alkylketten liegt zwischen 3 und 12 C-Atomen.

Die Sulfate, Sulfonate und Phosphate werden als Lithium-, Natrium-, Kalium- und Ammoniumsalze eingesetzt. Die Natrium-, Kalium und Ammoniumsalze sind bevorzugt.

Beispiele für derartige Sulfonate, Sulfate und Phosphate sind Na-Laurylsulfat, Na-Alkylsulfonat, Na-Alkylarylsulfonat, Na-Salze methylenverbrückter Arylsulfonate, Na-Salze alkylierter Naphthalinsulfonate sowie die Na-Salze methlyenverbrückter Napthalinsulfonate, die auch oligomerisiert sein können, wobei der Oligimerisierungsgrad zwischen 2 bis 10 liegt. Üblicherweise liegen die alkylierten Naphthalinsulfonsäuren und die methylenverbrückten (und gegebenenfalls alkylierten) Naphthalinsulfonsäuren als Isomerengemische vor, die auch mehr als 1 Sulfonsäuregruppe (2 bis 3 Sulfonsäuregruppen) im Molekül enthalten können. Besonders bevorzugt sind Na-Laurylsulfat, Na-Alkylsuflonatgemische mit 12 bis 18 C-Atomen, Na-Alkylarylsulfonate, Na-Diisobutylennaphthalinsulfonat, methlyenverbückte Polynaphthalinsulfonatgemische sowie methylenverbrückte Arylsulfonatgemische.

**Neutrale Emulgatoren** leiten sich von Additionsprodukten des Ethylenoxids und des Propylenoxids an Verbindungen mit hinreichend acidem Wasserstoff ab. Hierzu gehören beispielsweise Phenol, alkyliertes Phenol und alkylierte Amine. Die mittleren Polymerisationsgrade der Epoxide liegen zwischen 2 bis 20. Beispiele für neutrale Emulgatoren sind ethoxylierte Nonylphenole mit 8, 10 und 12 Ethylenoxideinheiten. Die neutralen Emulgatoren werden üblicherweise nicht alleine, sondern in Kombination mit anionischen Emulgatoren eingesetzt.

Bevorzugt sind die Na- und K-Salze von disproportionierter Abietinsäure und von teilhydrierter Talgfettsäure, sowie Mischungen derselben, Natriumlaurylsulfat, Na-Alkylsulfonate, Natrium-Alkylbenzolsufonat sowie alkylierte und methylenverbrückte Naphthalinsulfonsäuren.

Die Emulgatoren werden in einer Menge von 0,2 bis 15 Gew.-Teile, bevorzugt 0,5 bis 12,5 Gew.-Teile, besonders bevorzugt 1,0 bis 10 Gew.-Teile bezogen auf 100 Gew.-Teile der Monomermischung eingesetzt.

Die Emulsionspolymerisation wird unter Verwendung der genannten Emulgatoren durchgeführt. Falls nach Abschluss der Polymerisation Latices erhalten werden, die aufgrund einer gewissen Instabilität zur vorzeitigen Selbstkoagulation neigen, können die genannten Emulgatoren auch noch zur Nachstabilisierung der Latices zugesetzt werden. Dies kann insbesondere vor der Entfernung nicht umgesetzter Monomerer durch Behandlung mit Wasserdampf sowie vor einer Latexlagerung notwendig werden.

## Molekulargewichtsregler

Zur **Molekulargewichtsregelung** des entstehenden Nitrilkautschuks wird mindestens ein Molekulargewichtsregler eingesetzt.

Der Regler wird üblicherweise in einer Menge von 0,01 bis 3,5 Gew.-Teilen, bevorzugt von 0,05 bis 2,5 Gew.-Teilen auf 100 Gew.-Teile der Monomermischung eingesetzt.

Zur Einstellung des Molekulargewichts können mercaptanhaltige Carbonsäuren, mercaptanhaltige Alkohole, Xanthogendisulfide, Thiuramdisulfide, halogenierte Kohlenwasser-stoffe, verzweigte aromatische oder aliphatische Kohlenwasserstoffe sowie auch lineare oder verzweigte Mercaptane eingesetzt werden. Diese Verbindungen weisen üblicherweise 1 bis 20 Kohlenstoffatome auf (siehe Rubber Chemistry and Technology (1976), 49(3), 610-49 (Uraneck, C. A.): "Molecular weight control of elastomers prepared by emulsion polymerization" und D. C. Blackley, Emulsion Polymerization, Theory and Practice, Applied Science Publishers Ltd London, 1975, S. 329-381). Beispiele für mercaptanhaltige Alkohole und mercaptanhaltige Carbonsäuren sind Monothioethylenglycol und Mercaptopropionsäure.

Beispiele für Xanthogendisulfide sind Dimethylxanthogendisulfid, Diethylxanthogendisulfid, und Diisopropylxanthogendisulfid.

Beispiele für Thiuramdisulfide sind Tetramethylthiuramdisulfid, Tetraethylthiuramdisulfid und Tetrabutylthiuramdisulfid.

Beispiele für halogenierte Kohlenwasserstoffe sind Tetrachlorkohlenstoff, Chloroform, Methyljodid, Dijodmethan, Difluorodijodomethan, 1,4-Dijodobutan, 1,6-Dijodohexan, Ethylbromid, Ethyljodid, 1,2-Dibromotetrafluorethan, Bromtrifluorethen, Bromdifluorethen.

Beispiele für verzweigte Kohlenwasserstoffe sind diejenigen, von denen leicht ein H-Radikal abgespaltet werden kann. Beispiele hierfür sind Toluol, Ethylbenzol, Cumol, Pentaphenylethan, Triphenylmethan, 2,4-Diphenyl,4-Methyl-1-Penten, Dipenten sowie Terpene wie z.B. Limonen, $\alpha$-Pinen, $\beta$-Pinen, $\alpha$-Carotin und $\beta$-Carotin.

Beispiele für lineare oder verzweigte Mercaptane sind n-Hexylmercaptan oder auch Mercaptane, die 12-16 Kohlenstoffatome und mindestens drei tertiäre Kohlenstoffatomen enthalten, wobei der Schwefel an eines dieser tertiären Kohlenstoffatome gebunden ist. Diese Mercaptane sind bevorzugt und können entweder einzeln oder in Gemischen verwendet werden. Geeignet sind beispielsweise die Additionsverbindungen von Schwefelwasserstoff an oligomerisiertes Propen, insbesondere tetrameres Propen, oder an oligomerisiertes Isobuten, insbesondere trimere Isobuten, die in der Literatur häufig als tertiäres Dodecylmercaptan ("t-DDM") bezeichnet werden.

Solche Alkylthiole bzw. (Isomeren)-Mischungen von Alkylthiolen sind entweder käuflich erhältlich oder aber nach Verfahren, die in der Literatur hinlänglich beschrieben sind, für den Fachmann herstellbar (siehe z.B. z.B. JP 07-316126, JP 07-316127 und JP 07-316128 sowie GB 823,823 **und** GB 823,824**.)**

Ein Beispiel für ein Alkylthiol, das die oben vorgegebene Definition erfüllt, ist 2,2,4,6,6,8,8-Pentamethylheptan-4-thiol.

Einsetzbar ist ferner ein Gemisch von $C_{12}$-Mercaptanen enthaltend

- 2,2,4,6,6-Pentamethylheptanthiol-4,
- 2,4,4,6,6-Pentamethylheptanthiol-2,

- 2,3,4,6,6-Pentamethylheptanthiol-2 und
- 2,3,4,6,6-Pentamethylheptanthiol-3,

welches zusammen mit einem Verfahren zu seiner Herstellung in der deutschen Patentanmeldung DE 102007024009 beschrieben wird. Dieses spezielle Gemisch kann durch Umsetzung von Schwefelwasserstoff mit Triisobuten in einem kontinuierlichen Verfahren bei Temperaturen im Bereich von 0°C bis -60°C erhalten werden, wobei

(a) der Schwefelwasserstoff vor der Umsetzung einer Trocknung unterzogen wird,
(b) das eingesetzte Triisobuten einen Wassergehalt von maximal 70 ppm besitzt,
(c) als Katalysator Bortrifluorid in Mengen von maximal 1,5 Gew.%, bezogen auf das eingesetzte Triisobuten verwendet wird,
(d) die Umsetzung in Abwesenheit von mit Bortrifluorid komplexbildenden Verbindungen erfolgt und
(e) das Reaktionsgemisch im Anschluss an die Umsetzung mit einer wässrigen alkalischen Lösung in Kontakt gebracht und der Katalysator entfernt wird.

Die einzelnen Alkylthiole bzw. deren Gemische werden üblicherweise in einer Menge von 0,05 bis 3 Gew.-Teilen, vorzugsweise von 0,1 bis 1,5 Gew.-Teilen bezogen auf 100 Gew.-Teile der Monomermischung eingesetzt.

Die Dosierung des Molekulargewichtsreglers bzw. der Molekulargewichtsreglermischung erfolgt entweder zu Beginn der Polymerisation oder aber portionsweise im Verlauf der Polymerisation, wobei die portionsweise Zugabe sämtlicher oder einzelner Komponenten der Reglermischung während der Polymerisation bevorzugt ist.

Der Molekulargewichtsregler findet sich aufgrund seiner Funktion in einem gewissen Maß in Form von Endgruppen im Nitrilkautschuk wieder. Wird somit beispielsweise ein Alkylthiol oder ein Gemisch von Alkylthiolen eingesetzt, weist der Nitrilkautschuk in einem gewissen Maß Alkylthio-Endgruppen auf. In dem Fall, dass das oben beschriebene spezielle Gemisch von $C_{12}$ Mercaptanen eingesetzt wird, handelt es sich somit um die entsprechenden Thio-Endgruppen der im Reglergemisch enthaltenen Thiole, d.h 2,2,4,6,6-Pentamethylheptan-4-thio- und/oder 2,4,4,6,6-Pentamethylheptan-2-thio- und/oder 2,3,4,6,6-Pentamethylheptan-2-thio und/oder 2,3,4,6,6-Pentamethylheptan-3-thio-Endgruppen. Bevorzugt weist der Nitrilkautschuk in diesem Fall 2,2,4,6,6-Pentamethylheptan-4-thio-, 2,4,4,6,6-Pentamethylheptan-2-thio-, 2,3,4,6,6-Pentamethylheptan-2-thio und 2,3.4.6,6-Pentamethylheptan-3-thio-Endgruppen auf.

Zur Initiierung der Emulsionspolymerisation werden typischerweise **Polymerisationsinitiatoren** eingesetzt, die in Radikale zerfallen (radikalische Polymerisationsinitiatoren). Hierzu gehören Verbindungen, die eine -O-O- Einheit (Peroxo-Verbindungen) oder eine -N=N- Einheit (Azoverbindung) enthalten.

Zu den Peroxoverbindungen gehören Wasserstoffperoxid, Peroxodisulfate, Peroxodiphosphate, Hydroperoxide, Persäuren, Persäureester, Persäureanhydride und Peroxide mit zwei organischen Resten. Geeignete Salze der Peroxodischwefelsäure und der Peroxodiphosphorsäure sind die Natrium-, Kalium- und Ammoniumsalze. Geeignete Hydroperoxide sind z.B. t-Butylhydroperoxid, Cumolhydroperoxid und p-Menthanhydroperoxid. Geeignete Peroxide mit zwei organischen Resten sind Dibenzoylperoxid, 2,4,-Dichlorbenzoylperoxid, Di-t-Butylperoxid, Dicumylperoxid, t-Butylperbenzoat, t-Butylperacetat etc. Geeignete Azoverbindungen sind Azobisisobutyronitril, Azobisvaleronitril und Azobiscyclohexannitril.

Wasserstoffperoxid, Hydroperoxide, Persäuren, Persäureester, Peroxodisulfat und Peroxodiphosphat werden auch in Kombination mit Reduktionsmitteln eingesetzt. Geeignete Reduktionsmittel sind Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin. Initiatorsysteme, die aus einem Oxidations- und einem Reduktionsmittel bestehen, bezeichnet man als Redoxsysteme. Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylendiamtetraacetat, Natrium-Nitrilotriacetat sowie Trinatriumphosphat oder Tetrakaliumdiphsophat.

Bevorzugte Redoxsysteme sind beispielsweise: 1) Kaliumperoxodisulfat in Kombination mit Triethanolamin, 2) Ammoniumperoxodiphosphat in Kombination mit Natrimmetabisulfit ($Na_2S_2O_5$), 3) p-Menthanhydroperoxid / Natriumformaldehydsulfoxylat in Kombination mit Fe-II-Sulfat ($FeSO_4$ x 7 $H_2O$), Natrium-Ethylendiaminoacetat und Trinatriumphosphat; 4) Cumolhydroperoxid / Natriumformaldehydsulfoxylat in Kombination mit Fe-II-Sulfat ($FeSO_4$ x 7 $H_2O$), Natrium-Ethylendiaminoacetat und Tetrakaliumdiphosphat.

Die Menge an Oxidationsmittel beträgt 0,001 bis 1 Gew.-Teile bezogen auf 100 Gew.-Teile Monomer. Die molare Menge an Reduktionsmittel liegt zwischen 50% bis 500% bezogen auf die molare Menge des eingesetzten Oxidationsmittels.

Die molare Menge an Komplexbildner bezieht sich auf die Menge an eingesetztem Übergangsmetall und ist mit diesem üblicherweise äquimolar.

Zur Durchführung der Polymerisation werden sämtliche oder einzelne Komponenten des Initiatorsystems zu Beginn der Polymerisation der Polymerisation oder während der Polymerisation zudosiert.

Die portionsweise Zugabe sämtlicher sowie einzelner Komponenten des Aktivatorsystems während der Polymerisation ist bevorzugt. Durch die sequentielle Zugabe lässt sich die Reaktionsgeschwindigkeit steuern.

Die **Polymerisationszeit** liegt im Bereich von 5 h bis 15 h und hängt im Wesentlichen vom Acrylnitrilgehalt der Monomermischung und von der Polymerisationstemperatur ab.

Die **Polymerisationstemperatur** liegt im Bereich von 0 bis 30°C, bevorzugt im Bereich von 5 bis 25°C.

Bei Erreichung von **Umsätzen** im Bereich von 50 bis 90%, vorzugsweise im Bereich von 70 bis 85% wird die Polymerisation abgestoppt.

Hierfür wird dem Reaktionsgemisch ein **Stopper** zugesetzt. Hierfür geeignet sind beispielsweise Dimethyldithiocarbamat, Na-Nitrit, Mischungen von Dimethyldithiocarbamat und Na-Nitrit, Hydrazin und Hydroxylamin sowie hiervon abgeleitete Salze wie Hydraziniumsulfat und Hydroxylammoniumsulfat, Diethylhydroxylamin, Diisopropylhydroxylamin, wasserlösliche Salze des Hydrochinon, Natriumdithionit, Phenyl-$\alpha$-Naphthylamin und aromatische Phenole wie tert-Butylbrenzkatechol, oder Phenothiazin.

Die bei der Emulsionspolymerisation verwendete **Wassermenge** liegt im Bereich von 100 bis 900 Gew.-Teilen, bevorzugt im Bereich von 120 bis 500 Gew.-Teilen, besonders bevorzugt im Bereich von 150 bis 400 Gew.-Teilen Wasser bezogen auf 100 Gew.-Teile der Monomermischung.

Zur Reduktion der Viskosität während der Polymerisation, zur pH-Einstellung sowie als pH-Puffer können der wässrigen Phase bei der Emulsionspolymerisation Salze zugesetzt werden. Typische Salze sind Salze einwertiger Metalle in Form von Kalium- und Natriumhydroxid, Natriumsulfat, Natriumcarbonat, Natriumhydrogencarbonat, Natriumchlorid und Kaliumchlorid. Bevorzugt sind Natrium- und Kaliumhydroxid, Natriumhydrogencarbonat und Kaliumchlorid. Die Mengen dieser Elektrolyte liegen im Bereich 0 bis 1 Gew.-Teile, vorzugsweise 0 bis 0,5 Gew.-Teile bezogen auf 100 Gew.-Teile der Monomermischung.

Die Polymerisation kann entweder diskontinuierlich oder auch kontinuierlich in einer Rührkesselkaskade durchgeführt werden.

Zur Erzielung eines gleichmäßigen Polymerisationsverlaufs wird für den Start der Polymerisation nur ein Teil des Initiatorsystems verwendet und der Rest während der Polymerisation nachdosiert.

Üblicherweise startet man die Polymerisation mit 10 bis 80 Gew. %, vorzugsweise 30-50 Gew. % der Gesamtmenge an Initiator. Auch die Nachdosierung einzelner Bestandteile des Initiatorsystems ist möglich.

Will man chemisch einheitliche Produkte herstellen, werden Acrylnitril bzw. Butadien nachdosiert, wenn die Zusammensetzung außerhalb des azeotropen Butadien/Acrylnitril-Verhältnisses liegt. Vorzugsweise ist eine Nachdosierung bei NBR-Typen mit Acrylnitrilgehalten von 10 bis 34 sowie bei den Typen mit 40 bis 50 Gew. % Acrylnitril (W. Hofmann, Rubber Chem. Technol. 36 (1963) 1) der Fall. Die Nachdosierung erfolgt - wie z.B. in der DD 154 702 angegeben - vorzugsweise computergesteuert auf der Basis eines Rechnerprogramms.

Zur Entfernung nicht umgesetzter Monomere sowie flüchtiger Bestandteile wird der abgestoppte Latex einer Wasserdampfdestillation unterzogen. Hierbei werden Temperaturen im Bereich von 70°C bis 150°C angewandt, wobei bei Temperaturen <100°C der Druck reduziert wird.

Vor der Entfernung der flüchtigen Bestandteile kann eine Nachstabilisierung des Latex mit Emulgator erfolgen. Hierfür verwendet man zweckmäßigerweise die zuvor genannten Emulgatoren in Mengen von 0,1 bis 2,5 Gew. %, vorzugsweise 0,5 bis 2,0 ,Gew. % bezogen auf 100 Gew.-Teile Nitrilkautschuk.

Vor oder bei der Latexkoagulation können dem Latex ein oder mehrere Alterungsschutzmittel zugesetzt werden. Hiefür eigenen sich phenolische, aminische und auch sonstige Alterungsschutzmittel.

Geeignete phenolische Alterungsschutzmittel sind alkylierte Phenole, styrolisiertes Phenol, sterisch gehinderte Phenole wie 2,6-Di-tert.-Butylphenol, 2,6-Di-*tert*-Butyl-p-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-*tert*-Butylphenol) (BPH) sowie sterisch gehinderte Thiobisphenole.

Falls eine Verfärbung des Kautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-$\alpha$-Naphthylamin (PAN), Phenyl-$\beta$-Naphthylamin (PBN), vorzugsweise solche auf Phenylendiaminbasis eingesetzt. Beispiele für Phenylendiamine sind *N*-Isopropyl-*N'*-phenyl-*p*-Phenylendiamin, *N*-1,3-Dimethylbutyl-*N'*-Phenyl-*p*-Phenylendiarnin (6PPD), *N*-1,4-Dimethylpentyl-*N'*-phenyl-*p*-Phenylendiamin (7PPD), *N,N'*-bis-1,4-(1,4-Dimethylpentyl)-*p*-Phenylendiamin (77PD) etc.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Altrungsschutzmitteln eingesetzt. TMQ, MBI und MMBI werden vor allem für NBR-Typen verwendet, die peroxidisch vulkanisiert werden.

**Latex-Koagulation**

Die Latexkoagulation wird im erfindungsgemäßen Verfahren unter Verwendung mindestens eines Magnesium-Salzes als Fällmittel durchgeführt, wobei optional bis zu 40 Gew. % des Magnesium-Salzes durch ein Calcium-Salz ersetzt sind. Gleichzeitig kann die Latexkoagulation und/oder Aufarbeitung des koagulierten Latex unter Einsatz von Calcium-Ionen haltigem Wasser durchgeführt werden; dies ist dann wichtig, wenn die Koagulation nur mit einem Magnesium-Salz als Fällmittel durchgeführt wird.

Als Magnesium-Salz ist beispielsweise Magnesiumchlorid, Magnesiumsulfat und Magnesiumnitrat geeignet. Bevorzugt wird Magnesiumchlorid oder Magnesiumsulfat oder Mischungen daraus eingesetzt. Bis zu 40 Gew.% des Magnesium-Salzes können optional durch mindestens ein Calcium-Salz, bevorzugt Calciumchlorid oder Calciumnitrat ersetzt werden. Besonders geeignet ist auch eine Mischung von mindestens 60 Gew.% Magnesiumchlorid und maximal 40 Gew.% Calciumchlorid.

Für die Latexkoagulation werden üblicherweise 0,1 bis 10 Gew. %, vorzugsweise 0,3 bis 5 Gew. % des Magnesium-Salzes bezogen auf Nitrilkautschuk eingesetzt.

Die Salz-Konzentration der Magnesium-Salz-Lösung bzw. der Magnesium- und Calcium-Salz haltigen Lösung beträgt üblicherweise 0,1 bis 35 Gew. %, vorzugsweise 0,5 bis 30 Gew. %, besonders bevorzugt 5 bis 25 Gew.%.

Die wässrige Lösung des Magnesium-Salzes kann mit entionisiertem Wasser oder nicht entionisiertem und somit Calciumionen-haltigem Wasser hergestellt werden.

Optional können in der Gesamtmenge des Fällmittels auch bis zu 15 Gew.% eines AlkalimetallSalzes enthalten sein. Dies ist jedoch in keiner Weise nicht zwingend.

**Cofällmittel Gelatine**

Neben dem zuvor beschriebenen Fällmittel ist es wichtig, dass im erfindungsgemäßen Verfahren Gelatine als Cofällmittel eingesetzt wird.

Gelatine ist ein Gemisch von Polypeptiden, das je nach Gewinnung Molmassen von ca. 13.500 bis 500.000 (bestimmt durch SDS-Gelelektrophorese oder Gelchromatographie) besitzt. Gelatine wird vornehmlich gewonnen durch eine mehr oder weniger weit geführte Hydrolyse des in Schwarten vom Schwein, in der Spalthaut des Rindes/Kalbes sowie deren Knochen enthaltenen Collagens. Eine Beschreibung der Gelatine sowie deren Herstellung findet sich in Ullmanns Enzyklopädie der Technischen Chemie, 4. Auflage, Band 12, Verlag Chemie, Weinheim-New York /1976), S. 211-220. Kommerziell erhältlich ist Gelatine als Granulat, Blattgelatine und als Lösung. Die Aminosäure-Zusammensetzung entspricht weitgehend der des Collagens, aus dem sie gewonnen wurde, und umfaßt mit Ausnahme des Tryptophans und Methionins alle essentiellen Aminosäuren; Leitaminosäure ist Hydroxyprolin. Gelatine enthält 84-90% Eiweiß und 2-4% Mineralstoffe sowie Wasser ad 100%.

Man unterscheidet zwei Herstellungsweisen: Das "saure Verfahren" liefert sogenannte sauer geäscherte Gelatinen und das "alkalische Verfahren" liefert sogenannte alkalisch geäscherte Gelatinen. Der Rohstoff für die sauer geäscherten Gelatinen (überwiegend Schweinehäute und - schwarten) wird einem sauren mehrtägigen Aufschlußprozeß unterworfen. Bei der Herstellung der alkalisch geäscherten Gelatine werden Rinderspalt (Mittelschicht zwischen der Leder- und der Unterhaut) bzw. Knochen 10-20 Tage mit Alkali behandelt.

Für die Verwendung als Cofällmittel bei der Latexkoagulation sind sämtliche Gelatinetypen geeignet, wobei Typen mit hohen Molmassen, insbesondere solche mit einer Viskosität >10cP in einer 10%igen wässrigen Lösung besonders geeignet sind.

Die Gelatine wird bezogen auf den Nitrilkautschuk mit 10 ppm bis 2 Gew. %, bevorzugt 30 ppm bis 0,5 Gew. %, besonders bevorzugt 50 bis 1000 ppm bezogen auf den Nitrilkautschuk eingesetzt.

Für die Latexkoagulation wird die Gelatine vorzugsweise in der wässrigen Lösung des Fällmittels, d.h. der Lösung des Magnesium-Salzes gelöst. Die Fällmittellösung enthält üblicherweise 0,1 bis 35 Gew. % des Magnesium-Salzes, wobei 0,1 bis 30 Gew.% bevorzugt und 5-25 Gew. % besonders bevorzugt sind. Die Gelatinekonzentration in der Fällmittellösung liegt im Bereich von 0,001 bis 3 Gew. %, bevorzugt im Bereich von 0,01 bis 1 Gew. %.

Für die Koagulation wird der Latex mit einem pH-Wert von mindestens 6, bevorzugt von > 6 eingesetzt. Gegebenenfalls wird dieser pH-Wert durch Zusatz einer Base, bevorzugt von Ammoniak bzw. Natrium- oder Kaliumhydroxid eingestellt. Säuren werden bei der Latex-Koagulation nach dem erfindungsgemäßen Verfahren nicht eingesetzt.

Der zur Koagulation eingesetzte Latex besitzt zweckmäßigerweise eine Feststoffkonzentration im Bereich von 1 bis 40 Gew. %, vorzugsweise im Bereich von 5 bis 35 Gew.% und besonders bevorzugt im Bereich von 15 bis 30 Gew. %.

Die Latexkoagulation erfolgt kontinuierlich oder diskontinuierlich. Bevorzugt ist eine kontinuierliche Koagulation, die mit Hilfe von Düsen durchgeführt wird.

In einer Ausführungsform des erfindungsgemäßen Verfahrens wird die gelatinehaltige Lösung des Magnesium-Salzes zum Latex gegeben. Alternativ kann auch der Latex vorgelegt und die gelatinehaltige Salzlösung zum Latex gegeben werden.

Bei der diskontinuierlichen wie bei der kontinuierlichen Latexkoagulation hat es sich bewährt, die Temperatur des Latex vor dem Kontakt mit der Gelatine auf einen Wert von maximal 50°C, bevorzugt < 50°C, besonders bevorzugt <40°C einzustellen und das Gemisch nach dem Kontakt auf eine Temperatur von bis zu 100°C, vorzugsweise auf eine Temperatur im Bereich von 75 bis 100°C zu erwärmen. Auf diesem Weg lässt sich unerwarteterweise der für eine quantitative Latexkoagulation notwendige Salzeinsatz reduzieren und die Menge an Verunreinigungen, die bei der Latexkoagulation in das Serum gelangen, vergrößern. Des Weiteren wird der bei der Latexkoagulation resultierende Feinkornanteil reduziert, und es entstehen gröbere, abfiltrierbare Partikel mit Durchmessern > 5 mm.

**Wäsche des koagulierten Nitrilkautschuks:**

Nach der Koagulation liegt der Nitrilkautschuk üblicherweise in Form sogenannter Krümel vor. Die Wäsche des koagulierten NBR wird daher auch als Krümelwäsche bezeichnet. Für die Wäsche dieser koagulierten Krümel kann entweder deionisiertes Wasser, (auch als "DW" abgekürzt) oder nicht entionisiertes Wasser (auch als "BW" abgekürzt) eingesetzt werden. Nicht ionisiertes Wasser ist Calcium-Ionen haltig.

Sofern die Koagulation des Latex mit einem Magnesium-Salz in Kombination mit Gelatine durchgeführt wird, ohne dass bis zu 40 Gew.% des Magnesium-Salzes durch ein Calcium-Salz ersetzt werden, so wird der entsprechende spezielle Calcium-Gehalt auf eine der beiden folgenden Wegen in den Nitrilkautschuk gebracht: Entweder wird bei der Wäsche des koagulierten NBR nicht entionisiertes und damit calciumionenhaltiges Wasser verwendet oder es wird für die Herstellung der Fällmittellösung nicht entionisiertes und damit Calcium-Ionen haltiges Wasser verwendet. Es können auch beide Maßnahmen miteinander kombiniert werden.

Die Wäsche wird bei einer Temperatur im Bereich von 15 bis 90°C durchgeführt, wobei eine Temperatur im Bereich von 45 bis 90°C bevorzugt ist.

Die Menge des Waschwassers beträgt 0,5 bis 500 Gew.-Teile, bevorzugt 1 bis 300 Gew.-Teile bezogen auf 100 Gew.-Teile Nitrilkautschuk.

Bevorzugterweise werden die Kautschukkrümel einer mehrstufigen Wäsche unterworfen, wobei die Kautschukkrümel zwischen den einzelnen Waschstufen teilweise entwässert werden. Die Restfeuchten der Krümel zwischen den einzelnen Waschstufen liegen im Bereich von 5 bis 100 Gew. %, vorzugsweise im Bereich von 7 bis 50 Gew. %. Die Zahl der Waschstufen liegt üblicherweise bei 1 bis 7, vorzugsweise bei 1 bis 3. Die Wäsche wird diskontinuierlich oder kontinuierlich durchgeführt. Vorzugsweise verwendet man ein mehrstufiges, kontinuierliches Verfahren, wobei für den schonenden Umgang mit Wasser eine Gegenstromwäsche bevorzugt ist.

**Wasserentfernung und Trocknung**

Nach Abschluss der Wäsche erfolgt typischerweise eine Entwässerung der Nitrilkautschuk-Krümel. Dies geschieht üblicherweise zweistufig. In der 1. Stufe werden die Kautschukkrümel mechanisch vorentwässert. In der 2. Stufe wird das restliche Wasser verdampft. Sowohl die Vorentwässerung als auch die Trocknung erfolgen bevorzugt kontinuierlich. Für die mechanische Vorentwässerung eignen sich Seiherschnecken, bei denen das Wasser seitlich über Seiherspalte abgequetscht wird oder Schnecken, bei denen die mechanische Entwässerung gegen den Produktstrom (Weldingprinzip) erfolgt.

Die Einstellung der im Nitrilkautschuk verbleibenden Kationengehalte kann zusätzlich und wenn gewünscht durch den Grad der mechanischen Vorentwässerung beeinflusst werden. Dies ist nicht zwingend, bietet sich aber insbesondere dann an, wenn eine sogenannte ineffiziente Wäsche angewandt wird. Eine effiziente Wäsche liefert bereits die geeigneten Kationengehalte. Die Wassergehalte nach der mechanischen Vorentwässerung liegen im Bereich von 5 bis 25 Gew. %. Für die Einstellung des im Produkt verbleibenden Kationenmixes hat es sich bewährt, dass die Wassergehalte nach der mechanischen Vorentwässerung 5 bis 15 Gew. %, insbesondere 5 bis 10 Gew. % betragen.

Die Trocknung des vorentwässerten Nitrilkautschuks erfolgt in einem Fließbettrockner oder in einem Plattentrockner. Die Temperaturen bei der Trocknung liegen bei 80 bis 150°C. Bevorzugt ist eine Trocknung mit Temperaturprogramm, wobei gegen Ende des Trockenprozesses die Temperatur abgesenkt wird.

Überraschenderweise besitzen die erfindungsgemäßen Nitrilkautschuke, die den aufgeführten speziellen Calcium- sowie Magnesium-Gehalt aufweisen, die gewünschte hohe Lagerstabilität LS von maximal 5 Mooney-Einheiten. Die hohe Lagerstabilität hat bereits während der Trocknung des Nitrilkautschuks positive Auswirkungen, da ansonsten bei dieser Trocknung schon ungewollt eine gewisse Alterung des Kautschuks stattfindet. Durch die hohe Lagerstabilität wird die Einstellung einer vorgegebenen Ziel-Mooney-Viskosität erleichtert. Hierdurch wird die Menge an nicht spezifikationsgerechtem Nitrilkautschuk reduziert. Des Weiteren resultiert aus der hohen Lagerstabilität eine Reduktion der Reklamationen, die sich durch Änderung der Mooney-Viskosität bei langen Lager- bzw. Transportzeiten ergeben. Die erfindungsgemäßen Kautschuke eignen sich für die reproduzierbare Herstellung von vulkanisierbaren Mischungen. Die hieraus durch Vulkanisation erhältlichen Formteile zeichnen sich somit auch durch ein reproduzierbares mechanisches und physikalisches Eigenschaftsprofil aus.

Zusätzlich zu der guten Lagerstabilität besitzen die erfindungsgemäßen Nitrilkautschuke auch die gewünschte hohe Vulkanisationsgeschwindigkeit (Differenz von Auswlkanisations- minus Anwlkanisationszeit), und die erhaltenen Vulkanisate verfügen über ein sehr gutes Modulniveau.

**Gegenstand der Erfindung** ist daher auch die Verwendung der erfindungsgemäßen Nitrilkautschuke zur Herstellung von vulkanisierbaren Mischungen enthaltend mindestens einen erfmdungsgemäßen Nitrilkautschuk, mindestens einen Vernetzer und gegebenenfalls weitere Additive.

Die Herstellung dieser vulkanisierbaren Mischungen erfolgt durch Mischen mindestens eines erfindungsgemäßen Nitrilkautschuks, mindestens eines Vernetzers und gegebenenfalls weiterer Additive.

Als **Vernetzer** kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimetylolpropantrimethacrylat, Zn-diacrylat, Zn-dimethacrylat, 1,2-Polybutadien oder N,N'-m-phenylendimaleinimid geeignet.

Die Gesamtmenge des oder der Vernetzer liegt üblicherweise im Bereich von 1 bis 20 phr, bevorzugt im Bereich von 1,5 bis 15 phr und besonders bevorzugt im Bereich von 2 bis 10 phr, bezogen auf den Nitrilkautschuk.

Als Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT, und Teramethylthiuramdisulfid (TMTD) in Frage.

Auch bei der Schwefelvulkanisation der erfindungsgemäßen Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen Nitrilkautschuke aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können beispielsweise eingesetzt werden: Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbarnat (ZBEC), Zinkpentamethylendithiocarbamat (Z5MC), Tellurdiethyldithio-carbamat, Nickeldibutyldithiocarbamat, Nickeldimethyldithiocarbamat und Zinkdiisononyldithio-carbamat.

Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid und Tetraethylthiuramdisulfid (TETD),

Als Thiazole können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzothiazol.

Als Sulfenamidderivate können zum Beispiel eingesetzt werden: N-Cyclohexyl-2-benzothiazylsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert.butylsulfenamid und Oxydiethylenthiocarbamyl-N-oxyethylensulfenamid.

Als Xanthogenate können zum Beispiel eingesetzt werden: Natriumdibutylxanthogenat, Zinkisopropyldibutylxanthogenat und Zinkdibutylxanthogenat.

Als Guanidinderivate können zum Beispiel eingesetzt werden: Diphenylguanidin (DPG), Di-o-tolylguanidin (DOTG) und o-Tolylbiguanid (OTBG).

Als Dithiophosphate können beispielsweise eingesetzt werden: Zinkdialkydithiophosphate (Kettenlänge der Alkylreste $C_2$ bis $C_{16}$), Kupferdialkyldithiophosphate (Kettenlänge der Alkylreste $C_2$ bis $C_{16}$) und Dithiophoshorylpolysulfid.

Als Caprolactam kann beispielsweise Dithio-bis-caprolactam eingesetzt werden.

Als Thicharnstoffderivate können beispielsweise N,N'-Diphenylthiohamstoff (DPTU), Diethylthiohamstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithio-bis-caprolactam.

Die Vernetzungsmittel und zuvor genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) eingesetzt werden.

Bei der erfindungsgemäßen Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, Calciumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Daneben können auch Anvulkanisationsverzögerer eingesetzt werden. Hierzu gehören Cyclohexylthiophthalimid (CTP), N,N' Dinitrosopentamethlyentetramin (DNPT), Phthalsäureanhydrid (PTA) und Diphenylnitrosamin. Bevorzugt ist Cyclohexylthiophthalimid (CTP).

Neben der Zugabe des oder der Vernetzer kann der erfindungsgemäße Nitrilkautschuk auch mit weiteren üblichen Kautschukadditiven gemischt werden.

Diese schließen beispielsweise die typischen und dem Fachmann hinlänglich bekannten Substanzen wie Füllstoffe, Füllstoffaktivatoren, Ozonschutzmittel, Alterungsschutzmittel, Antioxidationsmittel, Verarbeitungshilfsmittel, Extenderöle, Weichmacher, Verstärkungsmaterialien und Formtrennmittel ein.

Als **Füllstoffe** können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform), oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltiriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 phr, bezogen auf 100 phr des Nitrilkautschuks.

Als **Alterungsschutzmittel** können den vulkanisierbaren Mischungen diejenigen zugesetzt werden, die bereits im Zusammenhang mit der Latexkoagulation in dieser Anmeldung beschrieben werden. Sie werden üblicherweise in Mengen von ca. 0 bis 5 phr, bevorzugt 0,5 bis 3 phr, bezogen auf 100 phr des Nitrilkautschuks eingesetzt.

Als **Formtrennmittel** kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von ca. 0 bis 10 phr, bevorzugt 0,5 bis 5 phr, bezogen auf 100 phr des Nitrükautschuks eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

**Gegenstand der Erfindung** ist ferner ein Verfahren zur Herstellung von Formteilen auf Basis mindestens eines erfindungsgemäßen Nitrilkautschuks, welches dadurch gekennzeichnet ist, dass man die zuvor beschriebene vulkanisierbare Mischung in einem Formgebungsverfahren, bevorzugt unter Anwendung des Spritzgusses, vulkanisiert.

**Gegenstand der Erfindung** ist somit ebenso das Formteil, welches erhältlich ist durch das vorgenannte Vulkanisationsverfahren.

Durch dieses Verfahren können eine Vielzahl von Formteilen hergestellt werden, so z.B. eine Dichtung, eine Kappe, einen Schlauch oder eine Membran. Insbesondere eignen sich die erfindungsgemäßen Nitrilkautschuke mit der speziellen Ionenkennzahl zur Herstellung einer O-Ringdichtung, einer Flachdichtung, eines Wellendichtrings, einer Dichtmanschette, einer Dichtkappe, einer Staubschutzkappe, einer Steckerdichtung, eines Thermoisolierschlauchs (mit und ohne PVC-Zusatz), eines Ölkühlerschlauchs, eines Luftansaugschlauchs, eines Servolenkschlauchs oder einer Pumpenmembran.

Alternativ zur direkten Herstellung von Formteilen auf Basis des erfindungsgemäßen Nitrilkautschuks ist es auch möglich, dass sich an die Herstellung des erfindungsgemäßen Nitrilkautschuks entweder (i) eine Metathese-Reaktion oder (ii) eine Metathese-Reaktion und eine nachfolgenden Hydrierung oder (iii) nur eine Hydrierung anschließt.

Diese Metathese bzw. Hydrierungsreaktionen sind beide dem Fachmann hinlänglich bekannt und in der Literatur beschrieben.

Die Metathese ist beispielsweise aus WO-A-021100941 sowie der WO-A-02/100905 bekannt.

Eine Hydrierung kann unter Einsatz homogener oder heterogener Hydrierkatalysatoren durchgeführt werden. Es ist ferner möglich, die Hydrierung in-situ durchzuführen, d.h. in dem gleichen Reaktionsgefäß, in dem gegebenenfalls zuvor auch der Metathese-Abbau erfolgte und ohne Notwendigkeit den abgebauten Nitrilkautschuk zu isolieren. Der Hydrierkatalysator wird einfach dem Reaktionsgefäß zugesetzt.

Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637, DE-A-25 39 132, EP-A- 0 134 023, DE-OS- 35 41 689, DE-OS- 35 40 918, EP-A-0 298 386, DE-OS- 35 29 252, DE-OS- 34 33 392, US-A-4,464,515 **und** US-A-4,503,196).

Geeignete Katalysatoren und Lösungsmittel für eine Hydrierung in homogener Phase werden im Folgenden beschrieben und sind auch aus DE-A-25 39132 und der EP-A-0 471 250 bekannt

Die selektive Hydrierung kann beispielsweise in Gegenwart eines Rhodium- oder Rutheniumhaltigen Katalysators erreicht werden. Einsetzbar ist beispielsweise ein Katalysator der allgemeinen Formel

$$(R^1_m B)_1 \, MX_n,$$

worin M Ruthenium oder Rhodium ist, $R^1$ gleich oder verschieden sind und eine $C_1$-$C_8$ Alkylgruppe, eine $C_4$-$C_8$ Cycloalkylgruppe, eine $C_6$-$C_{15}$ Aryl-Gruppe oder eine $C_7$-$C_{15}$ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris (triphenylphosphin)-rhodium(I)-chlorid, Tris(triphenylphosphin)-rhodium(III)-chlorid und Tris(dimethylsulfoxid)-rhodium (III)-chlorid sowie Tetrakis(triphenylphosphin)-hydrium-hydrid der Formel $(C_6H_5)_3P)_4RhH$ und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel $R^1_m B$ ist, wobei $R^1$, m und B die zuvor für den Katalysator genannten Bedeutungen besitzen. Bevorzugt ist m gleich 3, B gleich Phosphor und die Reste $R^1$ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodium-haltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150°C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Die nach der Metathese- und/oder Hydrierungsreaktion der erfindungsgemäßen Nitrilkautschuke erhaltenen gegebenenfalls hydrierten Nitrilkautschuke können analog zu den erfindungsgemäßen Nitrilkautschuken in vulkanisierbare Zusammensetzungen eingebracht werden und zur Herstellung von Vulkanisaten und Formteilen auf Basis solcher Vulkanisate verwendet werden. Diese gegebenenfalls hydrierten Nitrilkautschuke weisen Mooney-Viskositäten (ML (1+4 @100°C)) von 1 bis 50, vorzugsweise von 1 bis 40 Mooneyeinheiten auf. Die Mooney-Viskosität (ML (1+4@100°C)) wird mittels eines Scherscheibenviskosimeters nach DIN 53523/3 bzw. ASTM D 1646 bei 100°C bestimmt.

**BEISPIELE:**

**Allgemeine Angaben:**

**I Bestimmung der Kationengehalte**

Für die Bestimmung der Kationengehalte wurden 0,5 g der Nitrilkautschuke durch trockene Veraschung bei 550°C im Platintiegel mit anschliessendem Lösen der Asche in Salzsäure aufgeschlossen. Nach geeigneter Verdünnung der Aufschlusslösung mit deionisiertem Wasser werden die Metallgehalte durch ICP-OES (inductively coupled plasma - optical emission spectrometry) bei folgenden Wellenlängen:

| | |
|---|---|
| calcium: | 317,933 nm, |
| Magnesium: | 285,213 nm |
| Kalium: | 766,491 nm, und |
| Natrium: | 589,592 nm |

gegen mit Säurematrix angepasste Kalibrierlösungen gemessen. Je nach Konzentration der Elemente in der Aufschlusslösung bzw. Empfindlichkeit des verwendeten Messgeräts wurden die Konzentrationen der Probelösungen für die jeweils verwendeten Wellenlängen an den linearen Bereich der Kalibrierung angepasst (B. Welz "Atomic Absorption Spectrometry", 2nd Ed., Verlag Chemie, Weinheim 1985, Kapitel 9.1, 9.1.1, 9.1.2 und 9.1.3, S. 251-262)

**II Lagerstabilität**

Die getrockneten NBR-Kautschuke wurden durch die Mooney-Viskosität vor und nach einer Heißluftlagerung für 48 Stunden bei 100°C charakterisiert, d. h. die Bestimmung der Mooney-Viskosität erfolgte einmal direkt nach der Trocknung (d. h. vor der Heißluftlagerung) sowie anschließend nach 48stündiger Heißlußlalterung bei 100°C.

**III Anvulkanisationverhalten und Vulkanisationsgeschwindigkeit**

Das **Anvulkanisationsverhalten** (Mooneyscorch) wird mit Hilfe eines Scherscheibenviskosimeters nach DIN 53 523 bei 120°C bestimmt. Für die Bestimmung wird ein kleiner Rotor (S) verwendet. MS 5 (120°C) bedeutet die Zeit in min, in der der Mooneywert um 5 Mooney-Einheiten gegenüber dem Minimalwert ansteigt.
Die **Vulkanisationsgeschwindigkeit** wird nach DIN 53 529, Teil 3 bei 160°C mit Hilfe eines Rheometers der Firma Monsanto (MDR 2000E) als Differenz von $t_{90} - t_{10}$ bestimmt, wobei $t_{10}$ und $t_{90}$ die Vulkanisationszeiten sind, bei denen 10 % bzw. 90% des Endvulkanisationsgrades erreicht sind.

**IV Mechanische Eigenschaften**

Die **mechanischen Eigenschaften** der Kautschuke (wie Spannungswert bei verschiedenen Dehnungen, Reißfestigkeit und Bruchdehnung) werden an Vulkanisaten nach DIN 53 504 bestimmt.

**VI Chlor-Gehalt**

Der Chlorgehalt der erfindungsgemäßen Nitrilkautschuke wird wie folgt in Anlehnung an DIN EN 14582, Verfahren A bestimmt: Die Nitrilkautschuk-Probe wird in einem Druckgefäß nach Parr in einer Schmelze aus Natriumperoxid und Kaliumnitrat aufgeschlossen. Zu der entstehenden Schmelze wird Sulfitlösung zugegeben und mit Schwefelsäure angesäuert. In der dabei erhaltenen Lösung wird das entstandene Chlorid durch eine potentiometrische Titration mit Silbemitraflösung bestimmt und als Chlor berechnet.
Soweit nachfolgend in den Tabellen für Beispiele oder Vergleichsbeispiele die Abkürzung "RT" angegeben ist, bedeutet dies eine Temperatur von 20°C +/- 2°C.

**A NBR-Herstellung durch Emulsionspolymerisation**

Auf Basis der in der folgenden **Tabelle 1** angegebenen Rezepturen wurde ein NBR-Latex hergestellt. Sämtliche Einsatzstoffe sind in Gew.-Teilen bezogen auf 100 Gew.-Teile der Monomermischung angegeben. Die Polymerisation erfolgte bei einer Temperatur von 18 °C, für eine Dauer von 10 Stunden bis zum Erreichen eines Polymerisationsumsatzes von 80%.

**Tabelle 1:**

| Latexherstellung | Gew.-Teile |
|---|---|
| Butadien | 65 |
| Acrylnitril | 35 |
| Gesamt-Wassermenge | 200 |
| Erkantol® BXG[1] | 3,67 |
| Haykanol® PQ[2] | 1,10 |
| K-Salz der Kokosfettsäure | 0,73 |
| KOH | 0,05 |
| t-DDM[7] | 0,24/0,24 |
| Kaliumperoxodisulfat[3] | 0,39/0,20 |
| Tris-($\alpha$-hydroxy-ethyl)-amin[4] | 0,57 |
| Na-Dithionit[5] | 1,0 |
| Diethylhydroxylamin | 0,5 |
| Kaliumhydroxid | 1,28 |
| Vulkanox® KB[6] | 1,25 |
| [1] Natriumsalz einer Mischung von mono- und disulfonierten Naphthalinsulfonsäuren mit Isobutylenoligomersubstituenten (Erkantal® BXG) [2] Natriumsalz von Methlyen-bis-Naphthalinssulfonat (Baykanol® PQ, Lanxess Deutschland GmbH) 3) Aldrich-Bestellnummer : 21,622-4 4) Aldrich-Bestellnummer: T5,830-0 5) Aldrich-Bestellnummer : 15,795-3 6) 2,6-Di-tert.butyl-p-kresol der Lanxess Deutschland GmbH 7) t-DDM (Tertiäres Dodecylmercaptan): $C_{12}$-Mer-captangemisch der Lanxess Deutschland GmbH | |

Sind in der o g. Tabelle 1 in einer der Spalten zwei Zahlenwerte angegeben, so bedeutet dies, dass die gesamte Menge des jeweiligen Einsatzstoffes nicht in einer einzigen Portion zudosiert wurde, sondern ein erster Teil bei Polymerisationsbeginn vorgelegt und ein zweiter Teil nachdosiert wurde. Die Umsätze, bei denen diese Nachdosierung erfolgte, sind nachfolgend angegeben.

Die Herstellung des NBR-Latex erfolgte diskontinuierlich in einem 2 m³-Autoklaven mit Rührwerk. Bei dem Ansatz wurden 350 kg der Monomermischung und eine Gesamtwassermenge von 700 kg verwendet. In 600 kg dieser Wassermenge wurden die Emulgatoren Erkantol® BXG (12,85 kg), Baykanol® PQ (3,85 kg) und das Kaliumsalz der Kokosfettsäure (2,56 kg) mit 17,5 g Kaliumhydroxid im Autoklaven vorgelegt und mit einem Stickstoffstrom gespült Nach Beendigung der Stickstoffspülung wurden die entstabilisierten Monomeren (227,5 kg Butadien und 122,5 kg Acrylnitril) und eine Teilmenge des Reglers t-DDM (0,84 kg) in den Reaktor gegeben. Danach wurde der Reaktor verschlossen. Die Restmenge an Wasser (100 kg) wurde für die Herstellung der wässrigen Lösungen von Tris-($\alpha$-hydroxy-ethyl)-amin, Kaliumperoxodisulfat und der Abstopperlösungen verwendet. Durch Zugabe wässriger Lösungen von 1,365 kg Kaliumperoxodisulfat (entsprechend den 0,39 Gew.-Teilen gemäß Tabelle 1) und 2,0 kg Tris-($\alpha$-hydroxy-ethyl)-amin (entsprechend den 0,57 Gew.-Teilen gemäß Tabelle 1) wurde die Polymerisation bei 18°C gestartet und über die gesamte Laufzeit bei dieser Temperatur gehalten. Der Polymerisationsverlauf wurde durch gravimetrische Umsatzbestimmungen verfolgt. Bei einem Polymerisationsumsatz von 15 % wurden 0,84 kg Regler t-DDM (entsprechend 0,24 Gew.-Teilen gemäß Tabelle 1) und 0,7 kg Kaliumperoxodisulfat (entsprechend 0,2 Gew.-Teilen gemäß Tabelle 1) nachdosiert. Bei Erreichen von 80 % Umsatz (10 h) wurde die Polymerisation durch Zugabe einer wässrigen Lösung von Natriumdithionit/(N,N-Diethylhydroxylamin (DEHA) und Kaliumhydroxid abgestoppt. Nicht umgesetzte Monomere und sonstige flüchtigen Bestandteile wurden mittels Wasserdampfdestillation entfernt.

Charakteristische Daten des auf diese Weise erhaltenen Latex sind in nachfolgender Tabelle 2 zusanunenge-fasst.

**Tabelle 2:**

| | |
|---|---|
| Teilchendurchmesser ($d_{50}$) [nm] | 34 |
| Feststoffgehalt [Gew%] | 23,9 |
| pH-Wert | 11,7 |
| Acrylnitrilgehalt [Gew. %] | 34,1% |

Vor der Koagulation wurden aliquote Teile des NBR-Latex mit unterschiedlichen Mengen an 2,2'-Methylen-bis-(4-Methyl-6-*tert*-Butylphenol) (Vulkanox® BKF der Lanxess Deutschland GmbH) versetzt. Die zugesetzten Mengen an Vulkanox® BKF lagen zwischen 0,1 bis 0,8 phr bezogen auf NBR-Feststoff und sind in den Tabellen 4) und 5) angegeben. Hierfür wurde eine 50%ige Dispersion von Vulkanox® BKF in Wasser verwendet.

Die **Vulkanox® BKF-Dispersion** basierte auf folgender Rezeptur, wobei die Herstellung bei 95 bis 98°C mit Hilfe eines Ultraturrax erfolgte:

360 g    Entionisiertes Wasser (DW-Wasser)
40 g    Alkylphenolpolyglykolether (Emulgator NP® 10 der Lanxess Deutschland GmbH)
400 g    Vulkanox® BKF der Lanxess Deutschland GmbH

Zur Einstellung der in den Tabellen angegebenen Vulkanox® BKF-Gehalten wurden unterschiedliche Mengen der BKF-Dispersion zu dem NBR-Latex gegeben. Durch weiteren Zusatz unterschiedlicher Mengen an entionisiertem Wasser wurde in allen Fällen der Feststoffgehalt des NBR-Latex auf 23,79 Gew. % eingestellt.

**B Latexaufarbeitung**

Die Konzentration der Salzlösung sowie die für die Fällung eingesetzten Salzmengen wurden jeweils ohne Kristallwasser berechnet. Die bei der Latexkoagulation verwendeten Salze, die Konzentration der Salzlösungen, die bezogen auf den NBR Kautschuk eingesetzten Salzmengen, die Koagulationstemperatur, die Temperatur bei der Wäsche sowie die Dauer der Wäsche sind in den nachfolgenden Tabellen aufgelistet.

Die eingesetzten Gelatinetypen wurden von der Gelatinefabrik vormals Koepff & Söhne/Heilbronn bezogen. Die bei den Versuchen eingesetzten charakteristischen Kenngrößen für die verschiedenen Gelatinetypen wie Art der Gelatineäscherung ("sauer" oder "alkalisch"), Isoelektrischer Punkt (IEP) und Viskosität 10%iger Lösungen in Wasser basieren auf Herstellerangaben.

Für die Herstellung der Gelatinelösungen wurde die Gelatine zuerst ½ - 1 h in bei Raumtemperatur in Wasser gequollen und dann unter Erwärmung gelöst. Die Zugabe des Magnesium- und ggf. Calcium-Salzes erfolgte jeweils nach vollständiger Auflösung der Gelatine.

In der 1. **Versuchsserie** (Tabelle 3) wurde der Einfluss des Gelatine-Typs auf ihre Koagulationsaktivität untersucht. Bei dem nicht erfindungsgemäßen Referenzversuch V1, bei dem keine Gelatine verwendet wurde, wurde für eine quantitative Latexkoagulation eine Magnesiumchlorid-Menge von 1,5 Gew. % benötigt. Bei dem nicht erfindungsgemäßen Versuch V2 war die eingesetzte Magnesiumchlorid-Menge (0,85 Gew.%) für eine quantitative Latexkoagulation nicht ausreichend. Die in Tabelle 3 aufgeführten Versuche wurden dann mit einer konstanten Magnesiumchlorid-Menge von 0,85 Gew. % $MgCl_2$ durchgeführt. Bei dieser Magnesiumchlorid-Menge wurde jeweils die für eine quantitative Latexkoagulation notwendige Gelatinemenge ermittelt. Für die Versuche wurden jeweils 250 g Latex eingesetzt, der mit 0,8 phr Vulkanox® BKF stabilisiert war. Die Konzentration der Magnesiumchlorid-Lösung betrug jeweils 20 Gew. %. Die gelatinehaltigen Magnesiumchlorid-Lösungen wurden bei Raumtemperatur zum Latex gegeben, der dann unter Rühren auf 90°C erhitzt wurde. Die Ergebnisse dieser Versuche sind in Tabelle 3 zusammengefasst.

**Tabelle 3: 1. Versuchsserie (Vergleichsversuche V 1 und V 2 und erfindungsgemäße Beispiele 3 - 9)**

| | Latexkoagulation mit verschiedenen Gelatine-Typen | | | | | | | |
| --- | --- | --- | --- | --- | --- | --- | --- | --- |
| | Gelatinequalität | | | Fällbedingungen | | | | |
| Beispiel | Art der Äscherung | Isoelektrischer Punkt | Viskosität in Wasser (10%ige Lösung) [cP] | Fällmittel | Salzmenge bez. auf NBR [Gew%] | Gelatinemenge bez. auf NBR [ppm] | Temperatur des Latex bei Salzzugabe [°C] | Temperatur der Krümeldispersion nach Erwärmung [°C] |
| V1[1] | - | - | - | $MgCl_2$ | 1,5 | - | RT | 90 |
| V 2[2] | - | - | - | $MgCl_2$ | 0,85 | - | RT | 90 |
| 3 | sauer | 8,7 | 92,1 | $MgCl_2$/Gelatine | 0,85 | 85 | RT | 90 |
| 4 | sauer | 8,5 | 66,2 | $MgCl_2$/Gelatine | 0,85 | 400 | RT | 90 |
| 5 | sauer | 7,6 | 28,1 | $MgCl_2$/Gelatine | 0,85 | 500 | RT | 90 |
| 6 | sauer | 6,7 | 17,8 | $MgCl_2$/Gelatine | 0,85 | 800 | RT | 90 |
| 7 | alkalisch | 4,9 | 36 | $MgCl_2$/Gelatine | 0,85 | 500 | RT | 90 |
| 8 | alkalisch | 4,9 | 21,9 | $Mgcl_2$/Gelatine | 0,85 | 800 | RT | 90 |
| 9 | alkalisch | 4,6 | 8,4 | $MgCl_2$/Gelatine | 0,85 | 1000 | RT | 90 |

[1] Vergleichsversuch mit einer für eine quantitative Latexkoagulation ausreichenden $MgCl_2$-Menge
[2] Vergleichsversuch mit einer für eine quantitative Latexkoagulation nicht ausreichenden $MgCl_2$-Menge

In der 1. Versuchsserie (Tabelle 3) wird gezeigt, dass mit allen Gelatine-Typen (sauer und alkalisch geäscherten) bereits bei geringen zugegebenen Mengen eine Kompensation der für eine quantitative Latexkoagulation nicht ausreichenden Salzmenge möglich ist und dass Gelatinetypen mit hoher Molmasse (hohe Viskosität in Wasser) als Co-Fällmittel unter den gewählten Bedingungen zu leicht besseren Ergebnissen führen als Gelatinetypen mit niedriger Molmasse.

In weiteren Versuchsserien wurden größere Mengen von Latex koaguliert und untersucht. Die Fällmittelmengen (bei den erfindungsgemäßen Versuchen unter Verwendung von Gelatine) wurden jeweils in Vorversuchen so ausgelegt, dass die Latex-Koagulation quantitativ war und die bei der Latexkoagulation entstehenden Kautschukkrümel größer als 5 mm waren, damit sie bei der nachfolgenden Krümelwäsche nicht durch den Waschwasserstrom ausgetragen wurden.

Es wurden jeweils 25 kg Latex zum Feststoff aufgearbeitet Die Latexkoagulation erfolgte diskontinuierlich in einem rührbaren, offenen Behälter mit 100 1 Fassungsvermögen. Hierbei wurde der Latex im Koagulationsbehälter vorgelegt, dann auf die in den **Tabellen 4 und 5**, Spalte 6, genannten Temperaturen aufgeheizt (sofern dies notwendig war), anschließend die wässrige Salzlösung unter Rühren bei dieser Temperatur zugegeben und dann die Reaktionsmischung auf die in den **Tabellen 4 und 5** in Spalte 7 genannten Temperaturen erwärmt.

Für die Krümelwäsche war der 100 1-Koagulationsbehälter mit einem Zu- und Abfluss versehen. An der Innenseite des Behälters waren zwei Schienen so angebracht, dass der Abfluss mittels eines Siebes (Maschenweite 2 mm) vor der Durchführung der Wäsche abgesperrt werden konnte, so dass die koagulierten Krümel bei der Wäsche nicht ausgeschwemmt wurden. Die Wäsche wurde mit einem konstanten Wasserdurchsatz von 200 1/h durchgeführt. Für die Wäsche wurde sowohl entionisiertes (DW) als auch Calciumionenhaltiges normales Leitungswasser ("BW") verwendet (siehe Tabellen 4 und 5).

Nach Abschluss der Latexkoagulation wurden die Kautschukkrümel mit einem Sieb vom Serum abgetrennt und unter den in den **Tabellen 4 und 5** genannten Bedingungen (Wasserart, Waschtemperatur, Waschzeit etc.) gewaschen.

Für die Herstellung der Salzlösungen bzw. der gelatinehaltigen Salzlösungen wurde bei den erfindungsgemäßen **Beispielen 10 bis 17** sowie bei den nicht erfindungsgemäßen **Vergleichsbeispielen V18 bis V38** nicht deionisiertes, d. h. Ca-haltiges Wasser verwendet.

Beim erfindungsgemäßen Beispiel 16 wurde entionisiertes Wasser (DW) verwendet.

**Fällmittellösung 1)** bestand aus einer 10%igen $MgCl_2$.Lösung, die 0,1 Gew. % sauer geäscherter Gelatine (Viskosität in 10%iger wässriger Lösung: 92,1 cP; Isoelektrischer Punkt: 8,7) enthielt.

**Fällmittellösung 2)** bestand aus einer 10%igen $MgCl_2$-Lösung, die 0,3 Gew. % sauer geäscherter Gelatine (Viskosität in 10%iger wässriger Lösung: 92,1 cP; Isoelektrischer Punkt: 8,7) enthielt.

**Fällmitteltösung 3)** bestand aus einer 10%igen Salzlösung, die 0,3 Gew. % sauer geäscherter Gelatine (Viskosität in 10%iger wässriger Lösung: 92, cP; Isoelektrischer Punkt: 8,7) enthielt. Das Salz bestand zu 70% aus wasserfreiem $MgCl_2$-Salz und zu 30 % aus wasserfreiem $CaCl_2$. Für die Herstellung dieser Fällmittellösung wurde entionisiertes Wasser verwendet.

**Fällmittellösung 4)** bestand aus einer 10%igen $MgSO_4$-Lösung, die 0,3 Gew. % sauer geäscherter Gelatine (Viskosität in 10%iger wässriger Lösung: 92,1 cP; Isoelektrischer Punkt: 8,7) enthielt.

**Tabelle 4: 2. Versuchsserie (erfindungsgemäße Beispiele 10-17)**

| Beispiel | Vulkanox® BKF [phr] | Fällbedingungen | | | | | Waschbedingungen | | |
|---|---|---|---|---|---|---|---|---|---|
| | | Fällmittel | Salzmenge bezauf NBR [Gew.%] | Gelatinemenge bez. auf NBR [ppm] | Temperatur des Latex bei Salz-zugabe [°C] | Temperatur der Krümeldispersion nach Erwärmung [°C] | Wasserart | T [°C] | Zeit [h] |
| **Latexkoagulation mit Gelatinezusatz (Konzentration der Fällmittellösungen jeweils 10 Gew. %)** | | | | | | | | | |
| **10** | 0,1 | $MgCl_2$/Gelatine [1] | 0,85 | 85 | RT | 75 | BW | 60 | 8,0 |
| **11** | 0,2 | $MgCl_2$/ Gelatine [1] | 0,85 | 85 | 35 | 60 | BW | 60 | 8,0 |
| **12** | 0,3 | $MgCl_2$/Gelatine [2] | 0,65 | 195 | RT | 90 | BW | 60 | 8,0 |
| **13** | 0,5 | $MgCl_2$/Gelatine [2] | 0,65 | 195 | RT | 70 | BW | 60 | 8,0 |
| **14** | 0,5 | $MgCl_2$/Gelatine [2] | 0,65 | 195 | RT | 85 | BW | 60 | 8,0 |
| **15** | 0,8 | $MgCl_2$/Gelatine [2] | 0,65 | 195 | RT | 80 | BW | 60 | 8,0 |
| **16** | 0,8 | $MSCl_2$/$CaCl_2$/ Gelatine [3] | 1,13 | 339 | RT | 90 | BW | 90 | 4,0 |
| **17** | 0,8 | $MgSO_4$/ Gelatine [4] | 0,76 | 228 | RT | 90 | DW | 60 | 5,0 |

[1] Einsatz von Fällmittellösung 1)
[2] Einsatz von Fällmittellösung 2)
[3] Einsatz von Fällmittellösung 3)
[4] Einsatz von Fällmittellösung 4)

**Tabelle 5: 3. Versuchsserie (nicht erfindungsgemäße Beispiele V18 bis V38)**

| Beispiel | Vulkanox BKF [phr] | Fällbedingungen | | | | | | Waschbedingungen | | |
|---|---|---|---|---|---|---|---|---|---|---|
| | | Fällmittel | Cofällmittel (Art und Menge bez. auf NBR) | Konz. der Elekrolytlösung [Gew.% ] | Elektrolytmenge bez. auf NBR [Gew%] | Temperatur des Latex bei Salzzugabe [°C] | Temperatur der Krümeldispersion nach Erwärmung [°C] | Wasserart | T [°C] | Zeit [h] |
| **V 18** | 0,1 | NaCl | - | 26 | 33 | RT | 80 | BW | 60 | 8,0 |
| **V 19** | 0,1 | CaCl$_2$ | - | 30 | 3,4 | 40 | 80 | BW | 60 | 8,0 |
| **V 20** | 0,2 | NaCl | - | 26 | 33 | 40 | 70 | BW | 60 | 8,0 |
| **V 21** | 0,2 | CaCl$_2$ | - | 30 | 2,0 | 40 | 90 | BW | 60 | 8,0 |
| **V 22** | 0,2 | CaCl, | - | 30 | 3,4 | 40 | 75 | BW | 60 | 8,0 |
| **V 23** | 0,3 | NaCl | - | 26 | 33 | 60 | 60 | BW | 60 | 8,0 |
| **V 24** | 0,3 | CaCl$_2$ | - | 30 | 2,0 | 80 | 90 | BW | 60 | 8,0 |
| **V 25** | 0,3 | CaCl$_2$ | - | 30 | 3,4 | 70 | 90 | BW | 60 | 8,0 |
| **V 26** | 0,3 | CaCl$_2$ | - | 0,5 | 1,8 | 70 | 90 | BW | 60 | 8,0 |
| **V 27** | 0,3 | CaCl$_2$, | - | 0,5 | 1,8 | RT | 60 | BW | 60 | 8,0 |
| **V 28** | 0,3 | CaCl$_2$ | - | 0,5 | 1,8 | RT | 60 | BW | RT | 8,0 |
| **V 29** | 0,3 | CaCl, | - | 0,3 | 1,8 | RT | 90 | BW | 60 | 8,0 |
| **V 30** | 0,3 | MgCl$_2$ | - | 10 | 1,7 | RT | 90 | BW | 60 | 8,0 |
| **V 31** | 0,3 | MgCl$_2$ | - | 10 | 3,4 | 35 | 80 | BW | 60 | 8,0 |
| **V 32** | 0,5 | NaCl | - | 26 | 33 | 40 | 70 | BW | 60 | 8,0 |
| **V 33** | 0,5 | CaCl$_2$ | - | 30 | 3,4 | 90 | 90 | BW | 60 | 8,0 |
| **V 34** | 0,8 | NaCl | - | 26 | 33 | RT | 90 | BW | 60 | 8,0 |
| **V 35** | 0,8 | CaCl$_2$ | - | 30 | 2,0 | 60 | 90 | BW | 60 | 8,0 |
| **V 36** | 0,8 | MgCl$_2$ CaCl$_2$ | - | 10 | 1,9 | RT | 90 | BW | 60 | 8,0 |

| Beispiel | Vulkanox BKF [phr] | Fällbedingungen | | | | | | | Waschbedingungen | | |
|---|---|---|---|---|---|---|---|---|---|---|---|
| | | Fällmittel | Cofällmittel (Art und Menge bez. auf NBR) | Konz. der Elekrolytlösung [Gew.%] | Elektrolytmenge bez. auf NBR [Gew%] | Temperatur des Latex bei Salzzugabe [°C] | Temperatur der Krümeldispersion nach Erwärmung [°C] | | Wasserart | T [°C] | Zeit [h] |
| V 37 | 0,3 | $H_2SO_4$ | Gelatine (5000 ppm) | 0,2 | 1,68 | RT | 90 | | BW | 60 | 8,0 |
| V 38 | 0,8 | $MgCl_2$ | methylcellulose (0,5 Gew.%) | 20 | 1,0 | 75 | 75 | | BW | 60 | 5 |

Die Durchführung des Vergleichsversuchs V 37 erfolgte nach der Lehre von US-A-2,487,263, wobei sauer geäscherte Gelatine mit einer Viskosität von 92,1 cP (10%ig in Wasser) eingesetzt wurde.

Die Durchführung des Vergleichsversuchs V 38 erfolgte nach der Lehre von DE-OS 23 32 096, wobei Methyl-cellulose (Methocel EXP XZ der Firma Dow) eingesetzt wurde.

In den Beispielen der Tabellen 4 und 5 wird gezeigt, dass für eine quantitative Lateackoagulation bei der erfindungsgemäßen Verwendung von Magnesium-Salzen ggf. zusammen mit Calcium-Salzen in Kombination mit Gelatine signifikant niedrigere Salzmengen benötigt werden als bei einer Elektrolytkoagulation ohne Gelatinezusätze.

Nach Durchführung der Latexkoagulation wurden die Kautschukkrümel mittels eines Siebs vom Latexserum entfernt. Vom Latexserum wurden üblicherweise ca. 200 g entnommen und zur vollständigen Entfernung von Polymerresten ½ h unter Rückfluss gekocht und über ein 20μ-Sieb filtriert. Die Bestimmung des CSB-Werts des Serums ($CSB_{Serum}$) wurde nach DIN 38 409, Teil 41 bzw. H 41-1 und H 41-2 durch Bestimmung des Verbrauchs an Kaliumdichromat in schwefelsaurem Milieu in Gegenwart eines Silbersulfatkatalysators durchgeführt. Ausgehend vom CSB-Wert des Serums ($CSB_{Serum}$) wurde der im Serum verbleibende CSB-Wert bezogen auf 1 kg des koagulierten Nitrilkautschuks ($CSB_{NBR}$) mit Hilfe der in der Beschreibung angegebenen Gleichungen berechnet.

**Tabelle 6: CSB-Werte der erfindungsgemäßen Beispiele 10 - 17**

| Beispiel | Fäll-mittel | FS [Gew.%] | $m_{FM}$ [$g_{FM}$// kgLatex] | $CSB_s$ [$g_{O2}$/kg Serum] | $CSB_{NBR}$ [$g_{O2}$/$kg_{NBR}$] |
|---|---|---|---|---|---|
| 10 | $MgCl_2$/Gelatine [1] | 23,79 | 20,2 | 52,9 | 174 |
| 11 | $MgCl_2$/Gelatine [1] | 23,79 | 20,2 | 50,3 | 165 |
| 12 | $MgCl_2$/Gelatine [2] | 23,79 | 15,5 | 59,4 | 194 |
| 13 | $MgCl_2$/Gelatine [2] | 23,79 | 15,5 | 50,6 | 165 |
| 14 | $MgCl_2$/Gelatine [2] | 23,79 | 15,5 | 55,9 | 183 |
| 15 | $MgCl_2$/Gelatine [2] | 23,79 | 15,5 | 55,0 | 180 |
| 16 | $MgCl_2$/$CaCl_2$/ Gelatine[3] | 23,79 | 26,9 | 46,4 | 154 |
| 17 | $MgSO_4$/Gelatine [4] | 23,79 | 18,1 | 53,1 | 174 |

**Tabelle 7: CSB-Werte der nicht erfindungsgemäßen Vergleichsbeispiele V 18-V 38**

| Beispiel | Fällmittel | FS [Gew.%] | $m_{FM}$ [$g_{FM}$// KgLatex] | $CSB_s$ [$g_{O2}$/kg Serum] | $CSB_{NBR}$ [$g_{O2}$/$kg_{NBR}$] |
|---|---|---|---|---|---|
| V 18 | NaCl | 23,79 | 30,2 | 36,3 | 162 |
| V 19 | $CaCl_2$ | 23,79 | 27,0 | 31,9 | 106 |
| V 20 | NaCl | 23,79 | 30,2 | 32,7 | 146 |
| V 21 | $CaCl_2$ | 23,79 | 15,9 | 39,2 | 128 |
| V 22 | $CaCl_2$ | 23,79 | 27,0 | 31,0 | 103 |
| V 23 | NaCl | 23,79 | 30,2 | 31,8 | 142 |
| V 24 | $CaCl_2$ | 23,79 | 15,9 | 35,5 | 116 |
| V 25 | $CaCl_2$ | 23,79 | 27,0 | 29,7 | 99 |
| V 26 | $CaCl_2$ | 23,79 | 856 | 13,8 | 94 |
| V 27 | $CaCl_2$ | 23,79 | 856 | 14,6 | 99 |
| V 28 | $CaCl_2$ | 23,79 | 856 | 14,4 | 98 |
| V 29 | $CaCl_2$ | 23,79 | 1427 | 13,5 | 124 |
| V 30 | $MgCl_2$ | 23,79 | 40,4 | 47,4 | 126 |
| V 31 | $MgCl_2$ | 23,79 | 80,9 | 39,3 | 139 |

(fortgesetzt)

| Beispiel | Fällmittel | FS [Gew.%] | $m_{FM}$ [$g_{FM}$// KgLatex] | $CSB_S$ [$g_{O2}$/kg Serum] | $CSB_{NBR}$ [$g_{O2}$/kg$_{NBR}$] |
|---|---|---|---|---|---|
| V 32 | NaCl | 23,79 | 30,2 | 32,4 | 145 |
| V33 | $CaCl_2$ | 23,79 | 27,0 | 36,5 | 121 |
| V 34 | NaCl | 23,79 | 30,2 | 37,4 | 167 |
| V 35 | $CaCl_2$ | 23,79 | 15,9 | 38,7 | 128 |
| V 36 | $MgCl_2$/$CaCl_2$ | 23,79 | 45,2 | 27,5 | 93,3 |
| V 37 | $H_2SO_4$ Gelatine | 23,79 | 2000 | 14,8 | 172 |
| V 38 | $MgCl_2$/ Methylcellulose | 23,79 | 11,9 | 44 | 143 |

Wie man durch Vergleich der in den **Tabellen 6 und 7** angegebenen CSB-Werte sieht, gelingt bei der Latexkoagulation mit $MgCl_2$, $MgCl_2$/$CaCl_2$ und $MgSO_4$ in Gegenwart von Gelatine eine signifikante Erhöhung des auf 1 kg NBR bezogenen CSB-Werts ($CSB_{NBR}$), d. h. die Menge an Verunreinigungen, die im Serum des koagulierten Latex verbleibt, wird durch Verwendung von Gelatine erhöht. Hierdurch resultiert ein Nitrilkautschuk mit reduziertem Gehalt an Verunreinigungen.

An aliquoten Mengen der Vergleichsbeispiele **V30, V31** und **V36** wurden die im Nitrilkautschuk verbliebenen Verunreinigungen durch mehrfache diskontinuierliche Wäsche extrahiert. Für die Wäsche wurde jeweils die Menge an deionisiertem Wasser eingesetzt, die nach der Latexkoagulation bzw. nach jedem einzelnen Waschschritt abgetrennt wurde. Jeder Waschschritt wurde 30 min. bei 90°C unter Rühren durchgeführt. Die bei den einzelnen Waschschritten extrahierten CSB-Mengen wurden jeweils auf 1 kg Nitrilkautschuk ($CSB_{NBR}$) bezogen **(Tabelle 8)**.

**Tabelle 8: CSB-Extraktion durch Krümelwäsche mit deionisiertem Wasser bei 90°C bei den nicht erfindungsgemäßen Vergleichsbeispielen V 30, V 31 und V 36**

| Beispiel | Salzart | Latexserum 1. Wäsche | 2. Wäsche | 3. Wäsche | Summe |
|---|---|---|---|---|---|
| | | $CSB_{NBR}$ [$g_{O2}$/kg$_{NBR}$] | | | |
| V 30 | $MgCl_2$ | 126 | 12 | 4 | 1 | 143 |
| V 31 | $MgCl_2$ | 139 | 9 | 3 | 1 | 152 |
| V 36 | $MgCl_2$/$CaCl_2$ | 93,3 | 8 | 3 | 0,7 | 105 |

In Tabelle 8) sind jeweils in der letzten Spalte die Summen der bei der Latexkoagulation und bei den 3 Wäschen angefallenen CSB-Werten aufgelistet ($CSB_{NBR}$). Durch Vergleich dieser Summen-CSB-Werte mit den im Serum nach der Latexkoagulation angefallenen CSB-Werten der erfindungsgemäßen Berispiele (Tabelle-6) wird deutlich, dass die Summen-CSB-Werte der nicht erfindungsgemäßen Beispielen **V 30**, **V 31 und V 38** niedriger sind als die im Serum anfallenden CSB-Werte bei Verwendung von Gelatine als Fällhilfsmittel; d. h. bei einer Latexkoagulation mit Gelatine als Cofällmittel, wird eine geringere CSB-Menge in die Kautschukkrümel eingeschlossen.

Nach Beendigung der Wäsche wurden die Kautschukkrümel der erfindungsgemäßen Beispiele **10** bis **17** sowie der nicht erfindungsgemäßen Vergleichsbeispiele **V 18** bis **V 38** mit einem Sieb entnommen und in einer Weldingschnecke auf eine Restfeuchte von 5 bis 15 Gew. % vorentwässert.

Die Endtrocknung der vorentwässerten Kautschukproben erfolgte diskontinuierlich in einem Vakuumtrockenschrank bei 70°C auf eine Restfeuchte von < 1,5 Gew. %.

Für die Bestimmung der Kationengehalte wurden aliquote Teile der Kautschukproben nach DIN 53 568 verascht und mittels Atomabsorptionsspektroskopie nach DIN 51401 bestimmt.

Die Kationengehalte und die Ionenkennzahlen der erfindungsgemäßen bzw. nicht erfindungsgemäßen Nitrilkautschuke aus den **Tabellen 4 und 5** sind in den **Tabellen 9 und 10** angegeben.

**Tabelle 9: Ionengehalte/Ionenkennzahlen der erfindungsgemäß hergestellten Nitrilkantschuke aus den Beispielen 10 - 17**

| Beispiel | Fällmittel | Cl-Gehalt [ppm] | Kationengehalt | | | | |
|---|---|---|---|---|---|---|---|
| | | | Ca [ppm] | Mg [ppm] | Na [ppm] | K [ppm] | IKZ |
| 10 | $MgCl_2$/ Gelatine | 55 | 108 | 151 | 66 | 14 | 23,7 |
| 11 | $MgCl_2$// Gelatine | 74 | 87 | 150 | 101 | 39 | 19,9 |
| 12 | $MgCl_2$/ Gelatine | 94 | 83 | 120 | 192 | 25 | 12,2 |
| 13 | $MgCl_2$/ Gelatine | n.b. | 56 | 163 | 150 | 20 | 17,5 |
| 14 | $MgCl_2$/ Gelatine | 90 | 84 | 125 | 175 | 54 | 12,9 |
| 15 | $MgCl_2$/ Gelatine | 75 | 91 | 120 | 103 | 31 | 16,6 |
| 16 | $MgCl_2$/ $CaCl_2$/ Gelatine | n.b. | 118 | 115 | 260 | 54 | 10,5 |
| 17 | $MgSO_4$/ Gelatine | 4 | 120 | 130 | 25 | 15 | 23,8 |

**Tabelle 10: Kationengehalt/Ionenkennzahlen der nicht erfingdungsgemäß hergestellten Nitrilkautschuken aus den Beispielen V 18 - V 38**

| Beispiel | Fällmittel | Cl-Gehalt [ppm] | Kationengehalt | | | | |
|---|---|---|---|---|---|---|---|
| | | | Ca [ppm] | Mg [ppm] | Na [ppm] | K [ppm] | IKZ |
| V 16 | NaCl | 260 | 247 | 9 | 250 | 12 | 8,0 |
| V 17 | $CaCl_2$ | 220 | 1595 | 5 | 131 | 34 | 113,7 |
| V 18 | NaCl | 370 | 151 | 9 | 360 | 40 | -4,2 |
| V 19 | $CaCl_2$ | 220 | 1225 | 5 | 160 | 59 | 84,0 |
| V 20 | $CaCl_2$ | 180 | 1535 | 4 | 93 | 29 | 110,8 |
| V 21 | NaCl | 460 | 289 | 10 | 340 | 18 | 7,7 |
| V 22 | $CaCl_2$ | 180 | 1220 | 4 | 173 | 50 | 83,2 |
| V 33 | $CaCl_2$ | 240 | 1580 | 4 | 178 | 53 | 109,9 |
| V 24 | $CaCl_2$ | 130 | 1485 | 4 | 177 | 56 | 102,7 |
| V 25 | $CaCl_2$ | 110 | 1585 | 5 | 140 | 44 | 112,3 |
| V 26 | $CaCl_2$ | 80 | 1445 | 9 | 135 | 47 | 102,4 |
| V 27 | $CaCl_2$ | 74 | 1470 | 5 | 80 | 19 | 106,9 |
| V 28 | $MgCl_2$ | 150 | 120 | 355 | 132 | 15 | 47,3 |
| V 29 | $MgCl_2$ | 150 | 125 | 395 | 98 | 11 | 54,2 |
| V 30 | NaCl | 240 | 226 | 9 | 210 | 5 | 8,8 |
| V 31 | $CaCl_2$ | 120 | 1255 | 7 | 100 | 34 | 89,8 |
| V 32 | NaCl | 120 | 265 | 8 | 260 | 15 | 9,2 |

(fortgesetzt)

| Beispiel | Fällmittel | Cl-Gehalt [ppm] | Kationengehalt | | | | |
|---|---|---|---|---|---|---|---|
| | | | Ca [ppm] | Mg [ppm] | Na [ppm] | K [ppm] | IKZ |
| **V 33** | $CaCl_2$ | 120 | 1255 | 7 | 108 | 37 | 89,4 |
| **V 34** | $MgCl_2$/ $CaCl_2$ | n.b. | 690 | 335 | 320 | 105 | 77,0 |
| **V 35** | $H_2SO_4$ / Gelatine | n.b. | n.b. | n.b. | n.b. | n.b. | n.b. |
| **V 36** | $MgCl_2$/ Methyl- cellulose | n.b. | 365 | 20 | 12 | 3 | 29,3 |

Die getrockneten NBR-Kautschuke wurden durch die Mooney-Viskosität vor und nach Heißluftlagerung bei 48 Stunden / 100°C charakterisiert, d. h. die Bestimmung der Mooney-Viskosität erfolgte einmal direkt nach der Trocknung (d. h. vor der Heißluftlagerung) sowie anschließend nach 48stündiger Heißluftlalterung bei 100°C.

**Tabelle 11: Lagerstabilitäten der erfindungsgemäß hergestellten Nitrilkautschuke 10 bis 17**

| Beispiel | Fällmittel | ML(1+4@100°C) [ME] | | |
|---|---|---|---|---|
| | | MV1 | MV2 | LS |
| **10** | $MgCl_2$/Gelatine | 39 | 39 | 0 |
| **11** | $MgCl_2$/Gelatine | 40 | 39 | -1 |
| **12** | $MgCl_2$/Gelatine | 39 | 38 | -1 |
| **13** | $MgCl_2$/Gelatine | 40 | 38 | -2 |
| **14** | $MgCl_2$/Gelatine | 40 | 38 | -2 |
| **15** | $MgCl_2$/Gelatine | 40 | 38 | -2 |
| **16** | $MgCl_2$/$CaCl_2$/Gelatine | 42 | 46 | 4 |
| **17** | $MgSO_4$/Gelatine | 41 | 45 | 4 |

**Tabelle 12: Lagerstabilitäten der nicht erfindungsgemäß hergestellten Nitrilkautschuke V18 bis V 38**

| Beispiel | Fällmittel | ML(1+4@100°C) [ME] | | |
|---|---|---|---|---|
| | | MV1 | MV2 | LS |
| **V 18** | NaCl | 40 | 39 | -1 |
| **V 19** | $CaCl_2$ | 40 | 40 | 0 |
| **V 20** | NaCl | 39 | 39 | 0 |
| **V 21** | $CaCl_2$ | 39 | 38 | -1 |
| **V 22** | $CaCl_2$ | 40 | 39 | -1 |
| **V 23** | NaCl | 39 | 38 | -1 |
| **V 24** | $CaCl_2$ | 39 | 39 | 0 |
| **V 25** | $CaCl_2$ | 39 | 39 | 0 |
| **V 26** | $CaCl_2$ | 40 | 39 | -1 |
| **V 27** | $CaCl_2$ | 41 | 40 | -1 |
| **V 18** | $CaCl_2$ | 41 | 39 | -2 |

(fortgesetzt)

| Beispiel | Fällmittel | ML(1+4@100°C) [ME] | | |
|---|---|---|---|---|
| | | MV1 | MV2 | LS |
| V 29 | $CaCl_2$ | 39 | 40 | 1 |
| V 30 | $MgCl_2$ | 40 | 46 | 6 |
| V 31 | $MgCl_2$ | 42 | 49 | 7 |
| V 32 | NaCl | 41 | 47 | 6 |
| V 33 | $CaCl_2$ | 38 | 38 | 0 |
| V 34 | NaCl | 40 | 37 | -3 |
| V 35 | $CaCl_2$ | 41 | 38 | -3 |
| V 36 | $MgCl_2/CaCl_2$ | 42 | 46 | +4 |
| V 37 | $H_2SO_4$/ Gelatine | 43 | 53 | +10 |
| V 38 | $MgCl_2$/Methylcellulose | 43 | 41 | -2 |

In den **Tabellen 9 und 11** wird gezeigt, dass die erfindungsgemäß hergestellten Nitrilkautschuke auch bei Ca-Gehalten < 150 ppm gute Lagerstabilitäten aufweisen. Der nach US 2,487,263 nicht erfindungsgemäß hergestellte Nitrilkautschuk weist eine schlechte Lagerstabilität auf und wurde nicht weiter untersucht.

Auf der Basis der in den Tabellen 4 und 5 beschriebenen Nitrilkautschuke wurden in einem 1,5 l Laborinnenmischer gemäß Tabelle 13 Kautschukmischungen hergestellt, wobei die einzelnen Mischungsbestandteile in der in der Tabelle angegebenen Reihenfolge gemischt wurden. Sämtliche Mischungsbestandteile sind in Gew.-Teilen bezogen auf 100 Gew.-Teile des Nitrilkautschuks angegeben.

**Tabelle 13: Zusammensetzung der Kautschukmischungen**

| Mischungsbestandteile | Menge in Gew.-Teilen |
|---|---|
| NBR | 100,0 |
| Stearinsäure | 2,0 |
| Zinkoxid: | 5,0 |
| Ruß N 330 | 40,0 |
| Phenol/Formaldehyd-Harz (Plastikator® FH) | 5,0 |
| N-Cyclohexyl-benzthiazylsulfenamid (Vulkacit® CZ) | 0,9 |
| Schwefel | 1,5 |

Das Vulkanisationsverhalten der Mischungen wurde im Rheometer bei 160°C nach DIN 53 529 mit Hilfe des Monsantorheometers MDR 2000E bestimmt. Auf diese Weise wurden die charakteristischen Vulkanisationszeiten $t_{10}$ und $t_{90}$ bestimmt.

Nach DIN 53 529, Teil 3 bedeuten:

$t_{10}$: Zeit, bei der 10% des Umsatzes erreicht sind

$t_{90}$: Zeit, bei der 90% des Umsatzes erreicht sind

Die Herstellung der für die weiteren Messungen notwendigen vulkanisierten Prüfkörper erfolgte in der Presse unter einem Hydraulikdruck von 120 bar 30 min bei 160°C vulkanisiert. An den Vulkanisaten wurden mittels Zugversuches nach DIN 53504 der Spannungswert bei 300 % Dehnung ($\sigma_{300}$), die Zugfestigkeit ($\sigma_{max}$) und die Bruchdehnung ($\varepsilon_b$) bestimmt.

**Tabelle 14:** **Vulkanisationsverhalten und Vulkanisateigenschaften der erfindungsgemäßen Nitrilkautschuke aus Tabelle 4**

| Beispiel | BKF Zusatz [phr] | Fällmittel | IKZ | Vulkanisation | | | | Vulkanisateigenschaften | | |
|---|---|---|---|---|---|---|---|---|---|---|
| | | | | MS 5 (120°C) [min] | $t_{10}$ [sec] | $t_{90}$ [sec] | $t_{90}$-$t_{10}$ [sec] | $\sigma_{300}$ [MPa] | $\sigma_{max.}$ [MPa] | $\varepsilon_b$ [%] |
| 10 | 0,1 | $MgCl_2$/Gelatine | 23,7 | 43 | 5,1 | 11,1 | 6,0 | 9,5 | 23,3 | 562 |
| 11 | 0,2 | $MgCl_2$/Gelatine | 19,9 | 41 | 5,0 | 10,6 | 5,6 | 9,9 | 22,6 | 529 |
| 12 | 0,3 | $MgCl_2$/Gelatine | 12,2 | 35 | 4,9 | 10,4 | 5,5 | 9,5 | 24,1 | 576 |
| 13 | 0,5 | $MgCl_2$/Gelatine | 17,5 | 34 | 4,7 | 12,3 | 7,6 | 9,2 | 22,0 | 530 |
| 14 | 0,5 | $Mga_2$/Gelatine | 12,9 | 32 | 4,3 | 11,8 | 7,5 | 9,4 | 22,0 | 524 |
| 15 | 0,8 | $MgCl_2$/Gelatine | 16,6 | 31 | 4,4 | 11,9 | 7,5 | 9,4 | 22,9 | 562 |
| 16 | 0,8 | $MgCl_2$/$CaCl_2$/ Gelatine | 10,5 | 43 | 5,6 | 12,9 | 7,3 | 9,7 | 25,4 | 590 |
| 17 | 0,8 | $MgSO_4$/Gelatine | 23,8 | 42 | 5,2 | 11,8 | 6,6 | 10,0 | 23,0 | 525 |

**Tabelle 15: Vulkanisationsverhalten und Vulkanisateigenschaften der nicht erfindungsgemäßen Nitrilkautschuke aus Tabelle 5**

| Beispiel | BKF-Zusatz [phr] | Fällmittel | IKZ | Vulkanisation | | | | Vulkanisateigenschaften | | |
|---|---|---|---|---|---|---|---|---|---|---|
| | | | | MS 5 (120°C) [min] | $t_{10}$ [sec] | $t_{90}$ [sec] | $t_{90}$-$t_{10}$ [sec] | $\sigma_{300}$ [MPa] | $\sigma_{max.}$ [MPa] | $\varepsilon_b$ [%] |
| V 18 | 0,1 | NaCl | 4,0 | 49 | 5,5 | 11,5 | 6 | 10 | 23,5 | 550 |
| V 19 | 0,1 | CaCl$_2$ | 113,7 | 53 | 5,9 | 17,4 | 11,5 | 9,3 | 24,4 | 592 |
| V 20 | 0,2 | NaCl | -4,2 | 43 | 5 | 11,2 | 6,2 | 9,9 | 23,6 | 548 |
| V 21 | 0,2 | CaCl$_2$ | 84,0 | 44 | 5,2 | 14 | 8,8 | 9,1 | 22,4 | 568 |
| V 22 | 0,2 | CaCl$_2$ | 110,8 | 51 | 6,1 | 17,3 | 11,2 | 9,0 | 22,6 | 563 |
| V 23 | 0,3 | NaCl | -1,8 | 39 | 4,9 | 11,1 | 6,2 | 9,8 | 22,4 | 538 |
| V 24 | 0,3 | CaCl$_2$ | 83,2 | 44 | 5,5 | 14,3 | 8,8 | 8,9 | 21,6 | 556 |
| V 25 | 0,3 | CaCl$_2$ | 109,9 | 47 | 5,9 | 17,6 | 11,7 | 8,9 | 21,1 | 552 |
| V 26 | 0,3 | CaCl$_2$ | 102,7 | 53 | 6,6 | 19 | 12,4 | 8,4 | 22,0 | 603 |
| V 27 | 0,3 | CaCl$_2$ | 112,3 | 56 | 6,8 | 19,1 | 12,3 | 8,3 | 23,0 | 626 |
| V 28 | 0,3 | CaCl$_2$ | 102,4 | 56 | 7,0 | 20,3 | 13,3 | 8,2 | 22,4 | 623 |
| V 29 | 0,3 | CaCl$_2$ | 106,9 | 52 | 6,4 | 16,6 | 10,2 | 8,9 | 23,1 | 610 |
| V 30 | 0,3 | MgCl$_2$ | 47,3 | 40 | 5,3 | 13,4 | 8,1 | 9,0 | 24,0 | 600 |
| V 31 | 0,3 | MgCl$_2$ | 54,2 | 43 | 5,4 | 12,9 | 7,5 | 8,8 | 23,7 | 605 |
| V 32 | 0,5 | NaCl | 1,3 | 35 | 5,0 | 13,1 | 8,1 | 9,8 | 24,6 | 577 |
| V 33 | 0,5 | CaCl$_2$ | 89,8 | 43 | 5,6 | 14,2 | 8,6 | 8,9 | 22,4 | 587 |
| V 34 | 0,5 | NaCl | -2,7 | 32 | 4,5 | 12,6 | 8,1 | 9,6 | 23,9 | 527 |
| V 36 | 0,8 | CaCl$_2$ | 89,4 | 38 | 5,1 | 16,3 | 11,2 | 8,7 | 22,6 | 592 |
| V 37 | 0,3 | MgCl$_2$/ CaCl$_2$ | 77,0 | 48 | 6,0 | 17,3 | 11,3 | 9,1 | 25,1 | 616 |
| V 38 | 0,8 | MgCl$_2$/ Methyl-cellulose | 29,3 | 55 | 7,9 | 15,9 | 8,0 | 7,7 | 22,7 | 622 |

In den **Tabellen 14 und 15** wird gezeigt, dass der Mooneyscorch MS$_5$, die Vulkanisationsgeschwindigkeit ($t_{90}$-$t_{10}$) und die Vulkanisateigenschaften, insbesondere der Spannungswert bei 300% Dehnung ($\sigma_{300}$) essentiell von der Konzentration und dem relativen Verhältnis der Kationen im Nitrilkautschuk abhängen. Die Eigenschaften der Nitrilkautschuke werden durch den Calcium- und den Magnesium-Gehalt deutlich bestimmt. Es wird gezeigt, dass die erfindungsgemäßen, mit einem Magnesium-Salz in Kombination mit Gelatine koagulierten NBR-Latices einen niedrigeren Mooneyscorch und kürzere Vulkanisationszeiten aufweisen als nicht erfindungsgemäß mit einem 2-wertigen Elektrolyt koagulierte Nitrilkautschuke. Die Spannungswerte bei 300% Dehnung der mit Magnesiumchlorid/Gelatine koagulierten Nitrilkautschuke sind höher als bei den mit Calciumchlorid und Magnesiumchlorid koagulierten Nitrilkautschuken. Das mit Gelatine als Cofällmittel eingestellte Niveau der mechanischen Eigenschaften wird bei Verwendung von Methylcellulose als Cofällmittel nicht erreicht.

**Patentansprüche**

1.  Nitrilkautschuk, welcher Wiederholungseinheiten mindestens eines α,β-ungesättigten Nitrils, mindestens eines konjugierten Diens und gegebenenfalls eines oder mehrerer weiterer copolymerisierbarer Monomere enthält und der Magnesium-Ionen in einer Konzentration im Bereich von 100 - 180 ppm und Calcium-Ionen in einer Konzentration im Bereich von 50-145 ppm, jeweils bezogen auf den Nitrilkautschuk aufweist.

2. Nitrilkautschuk gemäß Anspruch 1 mit einer Ionenkennzahl der allgemeinen Formel (I) im Bereich von 5 - 30 ppm x Mol/g, besonders bevorzugt von 10-25 ppmx Mol/g,

$$IKZ = 3 \left[ \frac{c\,(Ca^{2+})}{40\ g/mol} + \frac{c\,(Mg^{2+})}{24\ g/mol} \right] - \left[ \frac{c\,(Na^{+})}{23\ g/mol} + \frac{c\,(K^{+})}{39\ g/mol} \right] \quad (I)$$

wobei $c(Ca^{2+})$, $c(Mg^{2+})$, $c(Na^{+})$ und $c(K^{+})$ die Konzentration der Calcium-, Magnesium-, Natrium- und Kalium-Ionen im Nitrilkautschuk in ppm angibt.

3. Nitrilkautschuk gemäß Anspruch 1 oder 2, der Wiederholungseinheiten von Acrylnitril, 1,3-Butadien und gegebenenfalls von einem oder mehreren weiteren copolymerisierbaren Monomeren enthält.

4. Nitrilkautschuk gemäß Anspruch 3, der Wiederholungseinheiten von einer oder mehreren $\alpha,\beta$-ungesättigten Mono- oder Dicarbonsäuren, deren Estern oder Amiden aufweist, bevorzugt Wiederholungseinheiten eines Alkylesters einer $\alpha,\beta$-ungesättigten Carbonsäuren, insbesondere von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat oder Lauryl(meth)acrylat.

5. Nitrilkautschuk gemäß einem oder mehreren der Ansprüche 1 bis 4, der eine Mooney-Viskosität (ML (1+4 @100°C)) von 10 bis 150, vorzugsweise von 20 bis 100 Mooneyeinheiten aufweist.

6. Nitrilkautschuk gemäß einem oder mehreren der Ansprüche 1 bis 5 mit einer Glastemperatur im Bereich von -70°C bis +10°C, vorzugsweise im Bereich von -60°C bis 0°C.

7. Nitrilkautschuk gemäß einem oder mehreren der Ansprüche 1 bis 6, der 2,2,4,6,6-Pentamethylheptan-4-thio- und/oder 2,4,4,6,6-Pentamethylheptan-2-thio- und/oder 2,3,4,6,6-Pentamethylheptan-2-thio und/oder 2,3,4,6,6-Pentamethylheptan-3-thio-Endgruppen aufweist.

8. Verfahren zur Herstellung von Nitrilkautschuken durch Emulsionspolymerisation mindestens eines $\alpha,\beta$-ungesättigten Nitrils, mindestens eines konjugierten Diens und gegebenenfalls eines oder mehrerer weiterer copolymerisierbarer Monomere in Gegenwart mindestens eines Molekulargewichtsreglers, wobei der bei der Polymerisation anfallende, den Nitrilkautschuk enthaltende Latex einer Koagulation unterworfen und der koagulierte Nitrilkautschuk anschließend gewaschen wird, **dadurch gekennzeichnet, dass**

   (i) der bei der Emulsionspolymerisation erhaltene Latex vor der Koagulation einen pH-Wert von mindestens 6 aufweist,
   (ii) die Latexkoagulation unter Verwendung mindestens eines Magnesium-Salzes als Fällmittel durchgeführt wird, wobei optional bis zu 40 Gew.% des Magnesium-Salzes durch ein Calcium-Salz ersetzt sind,
   (iii) Gelatine als Co-Fällmittel für die Koagulation eingesetzt wird,
   (iv) wobei die Temperatur des Latex vor dem Kontakt mit dem Co-Fällmittel (iii) auf eine Temperatur von maximal 50°C eingestellt wird und die Temperatur anschließend auf bis zu 100°C erhöht wird, und
   (v) die Latexkoagulation und/oder Aufarbeitung des koagulierten Latex unter Einsatz von Calcium-Ionen haltigem Wasser durchgeführt wird, sofern die Koagulation in Abwesenheit eines Calcium-Salzes als Fällmittel durchgeführt wird.

9. Verfahren gemäß Anspruch 8, wobei als Molekulargewichtsregler mindestens ein Alkylthiol eingesetzt wird, welches 12-16 Kohlenstoffatome und mindestens drei tertiäre Kohlenstoffatome enthält, wobei der Schwefel an eines dieser tertiären Kohlenstoffatome gebunden ist.

10. Verfahren gemäß Anspruch 8 oder 9, wobei die Emulsionspolymerisation diskontinuierlich oder kontinuierlich in einer Rührkesselkaskade durchgeführt wird.

11. Verfahren gemäß einem oder mehreren der Ansprüche 8 bis 10, wobei dem den Nitrilkautschuk enthaltenden Latex vor oder während der Koagulation ein oder mehrere Alterungsschutzmittel zugesetzt werden.

12. Verfahren gemäß einem oder mehreren der Ansprüche 8 bis 11, wobei für die Latexkoagulation Magnesiumchlorid, Magnesiumsulfat und/oder Magnesiumnitrat eingesetzt wird.

13. Verfahren gemäß einem oder mehreren der Ansprüche 8 bis 12, worin für die Latexkoagulation 0,1 bis 10 Gew. %, vorzugsweise 0,5 bis 5 Gew. % mindestens eines Magnesium-Salzes bezogen auf Nitrilkautschuk eingesetzt werden.

14. Verfahren gemäß einem oder mehreren der Ansprüche 8 bis 13, worin für die Latexkoagulation gerade solche Mengen mindestens eines Magnesium-Salzes verwendet werden, die zur vollständigen Koagulation des Nitrilkautschuks benötigt werden.

15. Verfahren gemäß einem oder mehreren der Ansprüche 8 bis 14, wobei die Konzentration der Lösung des Magnesium-Salzes, bevorzugt der Magnesiumchloridlösung, 0,1 bis 35 Gew. %, vorzugsweise 0,5 bis 30 Gew. % beträgt.

16. Verfahren gemäß einem oder mehreren der Ansprüche 8 bis 15, wobei der zur Koagulation eingesetzte Latex eine Feststoffkonzentration im Bereich von 1 % bis 40 %, vorzugsweise im Bereich von 5 % bis 35 % und besonders bevorzugt im Bereich von 15 bis 30 Gew. % besitzt.

17. Verfahren gemäß einem oder mehreren der Ansprüche 7 bis 16, wobei der Latex nach der Zugabe der Lösung mindestens eines Magnesium-Salzes auf eine Temperatur von bis zu 100°C, bevorzugt auf eine Temperatur im Bereich von 50 bis 90°C erwärmt wird.

18. Verfahren gemäß einem oder mehreren der Ansprüche 8 bis 17, wobei die Wäsche des koagulierten Nitrilkautschuks bei einer Temperatur im Bereich von 15 bis 90°C und bevorzugt bei einer Temperatur im Bereich von 45 bis 70°C durchgeführt wird.

19. Verfahren gemäß einem oder mehreren der Ansprüche 8 bis 18, wobei der erhaltene Nitrilkautschuk anschließend (i) entweder nur einer Metathese-Reaktion oder (ii) einer Metathese-Reaktion und einer nachfolgenden Hydrierung oder (iii) nur einer Hydrierung unterzogen wird.

20. Optional hydrierte Nitrilkautschuke erhältlich gemäß dem Verfahren nach Anspruch 19.

21. Verwendung der Nitrilkautschuke gemäß einem oder mehreren der Ansprüche 1 bis 6 oder 20 zur Herstellung von vulkanisierbaren Mischungen.

22. Vulkanisierbare Mischung enthaltend mindestens einen Nitrilkautschuk gemäß einem oder mehreren der Ansprüche 1 bis 6 oder mindestens einen optional hydrierten Nitrilkautschuk gemäß Anspruch 20 mindestens einen Vernetzer und gegebenenfalls weitere Additive.

23. Verfahren zur Herstellung einer vulkanisierbaren Mischung gemäß Anspruch 22, indem man mindestens einen Nitrilkautschuk gemäß einem oder mehreren der Ansprüche 1 bis 6 oder mindestens einen optional hydrierten Nitrilkautschuk gemäß Anspruch 20, mindestens einen Vernetzer und gegebenenfalls weitere Additive mischt.

24. Verfahren zur Herstellung von Formteilen indem man eine vulkanisierbare Mischung gemäß Anspruch 22 in einem Formgebungsverfahren, bevorzugt unter Anwendung eines Spritzgussverfahrens, vulkanisiert.

25. Formteil erhältlich gemäß dem Verfahren nach Anspruch 24.

26. Formteil gemäß Anspruch 25, **dadurch gekennzeichnet, dass** es sich um eine Dichtung, eine Kappe, einen Schlauch oder eine Membran handelt, insbesondere um eine O-Ringdichtung, eine Flachdichtung, einen Wellendichtring, eine Dichtmanschette, eine Dichtkappe, eine Staubschutzkappe, eine Steckerdichtung, einen Thermoisolierschlauch (mit und ohne PVC-Zusatz), einen Ölkühlerschlauch, einen Luftansaugschlauch, einen Servolenkschlauch oder eine Pumpenmembran.

**Claims**

1. Nitrile rubber which contains repeating units of at least one $\alpha,\beta$-unsaturated nitrile, at least one conjugated diene and optionally one or more further copolymerizable monomers and has magnesium ions in a concentration in the range from 100-180 ppm and calcium ions in a concentration in the range from 50-145 ppm, in each case based on the nitrile rubber.

2. Nitrile rubber according to Claim 1 having an ion index of the general formula (I) in the range from 5 to 30 ppm x mol/g, particularly preferably from 10 to 25 ppm x mol/g,

$$II = 3 \left[ \frac{c(Ca^{2+})}{40\ \text{g/mol}} + \frac{c(Mg^{2+})}{24\ \text{g/mol}} \right] - \left[ \frac{c(Na^+)}{23\ \text{g/mol}} + \frac{c(K^+)}{39\ \text{g/mol}} \right] \quad (I)$$

where $c(Ca^{2+})$, $c(Mg^{2+})$, $c(Na^+)$ and $c(K^+)$ indicate the concentrations of the calcium, magnesium, sodium and potassium ions in the nitrile rubber in ppm.

3. Nitrile rubber according to Claim 1 or 2 containing repeating units of acrylonitrile, 1,3-butadiene and optionally one or more further copolymerizable monomers.

4. Nitrile rubber according to Claim 3 having repeating units of one or more $\alpha,\beta$-unsaturated monocarboxylic or dicarboxylic acids, their esters or amides, preferably repeating units of an alkyl ester of an $\alpha,\beta$-unsaturated carboxylic acid, in particular methyl (meth)acrylate, ethyl (meth)acrylate, propyl (meth)acrylate, n-butyl (meth)acrylate, t-butyl (meth)acrylate, hexyl (meth)acrylate, 2-ethylhexyl (meth)acrylate, octyl (meth)acrylate or lauryl (meth)acrylate.

5. Nitrile rubber according to one or more of Claims 1 to 4 which has a Mooney viscosity (ML (1+4 @100°C)) of from 10 to 150 Mooney units, preferably from 20 to 100 Mooney units.

6. Nitrile rubber according to one or more of Claims 1 to 5 having a glass transition temperature in the range from -70°C to +10°C, preferably in the range from -60°C to 0°C.

7. Nitrile rubber according to one or more of Claims 1 to 6 which has 2,2,4,6,6-pentamethylheptane-4-thio and/or 2,4,4,6,6-pentamethylheptane-2-thio and/or 2,3,4,6,6-pentamethylheptane-2-thio and/or 2,3,4,6,6-pentamethylheptane-3-thio end groups.

8. Process for producing nitrile rubbers by emulsion polymerization of at least one $\alpha,\beta$-unsaturated nitrile, at least one conjugated diene and optionally one or more further copolymerizable monomers in the presence of at least one molecular weight regulator, with the latex which is obtained in the polymerization and contains the nitrile rubber being subjected to coagulation and the coagulated nitrile rubber subsequently being washed, **characterized in that**

   (i) the latex obtained in the emulsion polymerization has a pH of at least 6 before the coagulation,
   (ii) the coagulation of the latex is carried out using at least one magnesium salt as precipitant, with optionally up to 40% by weight of the magnesium salt being replaced by a calcium salt,
   (iii) gelatin is used as coprecipitant for the coagulation,
   (iv) the temperature of the latex is set to a temperature of not more than 50°C before contact with the coprecipitant
   (iii) and the temperature is subsequently increased to up to 100°C and
   (v) the coagulation of the latex and/or work-up of the coagulated latex is carried out using water containing calcium ions if the coagulation is carried out in the absence of a calcium salt as precipitant.

9. Process according to Claim 8, wherein at least one alkyl thiol which contains 12-16 carbon atoms and at least three tertiary carbon atoms, with the sulphur being bound to one of these tertiary carbon atoms, is used as molecular weight regulator.

10. Process according to Claim 8 or 9, wherein the emulsion polymerization is carried out batchwise or continuously in a cascade of stirred vessels.

11. Process according to one or more of Claims 8 to 10, wherein one or more ageing inhibitors are added to the latex containing the nitrile rubber before or during coagulation.

12. Process according to one or more of Claims 8 to 11, wherein magnesium chloride, magnesium sulphate and/or magnesium nitrate is used for coagulation of the latex.

13. Process according to one or more of Claims 8 to 12, wherein from 0.1 to 10% by weight, preferably from 0.5 to 5% by weight, of at least one magnesium salt, based on nitrile rubber, is used for the coagulation of the latex.

14. Process according to one or more of Claims 8 to 13, wherein just such amounts of at least one magnesium salt which are needed for complete coagulation of the nitrile rubber are used for the coagulation of the latex.

15. Process according to one or more of Claims 8 to 14, wherein the concentration of the solution of the magnesium salt, preferably the magnesium chloride solution, is from 0.1 to 35% by weight, preferably from 0.5 to 30% by weight.

16. Process according to one or more of Claims 8 to 15, wherein the latex used for the coagulation has a solids concentration in the range from 1% to 40%, preferably in the range from 5% to 35% and particularly preferably in the range from 15 to 30% by weight.

17. Process according to one or more of Claims 7 to 16, wherein the latex is, after the addition of at least one magnesium salt to the solution, heated to a temperature of up to 100°C, preferably to a temperature in the range from 50 to 90°C.

18. Process according to one or more of Claims 8 to 17, wherein the washing of the coagulated nitrile rubber is carried out at a temperature in the range from 15 to 90°C, preferably at a temperature in the range from 45 to 70°C.

19. Process according to one or more of Claims 8 to 18, wherein the nitrile rubber obtained is subsequently subjected to either (i) only a metathesis reaction or (ii) a metathesis reaction and a subsequent hydrogenation or (iii) only a hydrogenation.

20. Optionally hydrogenated nitrile rubbers which can be obtained by the process according to Claim 19.

21. Use of the nitrile rubbers according to one or more of Claims 1 to 6 or 20 for producing vulcanizable mixtures.

22. Vulcanizable mixture containing at least one nitrile rubber according to one or more of Claims 1 to 6 or at least one optionally hydrogenated nitrile rubber according to Claim 20, at least one crosslinker and optionally further additives.

23. Process for producing a vulcanizable mixture according to Claim 22 by mixing at least one nitrile rubber according to one or more of Claims 1 to 6 or at least one optionally hydrogenated nitrile rubber according to Claim 20, at least one crosslinker and optionally further additives.

24. Process for producing mouldings wherein a vulcanizable mixture according to Claim 22 is vulcanized in a shaping process, preferably using an injection moulding process.

25. Moulding obtainable by the process according to Claim 24.

26. Moulding according to Claim 25, **characterized in that** it is a seal, a cap, a hose or a diaphragm, in particular an O-ring seal, a flat seal, a corrugated sealing ring, a sealing sleeve, a sealing cap, a dust protection cap, a plug seal, a thermal insulation hose (with or without addition of PVC), an oil cooler hose, an air intake hose, a servo control hose or a pump diaphragm.

**Revendications**

1. Caoutchouc nitrile, qui contient des unités de répétition d'au moins un nitrile $\alpha,\beta$-insaturé, d'au moins un diène conjugué et éventuellement d'un ou de plusieurs monomères copolymérisables supplémentaires, et qui présente des ions magnésium dans une concentration dans la plage allant de 100-180 ppm et des ions calcium dans une concentration dans la plage allant de 50-145 ppm, chaque fois par rapport au caoutchouc nitrile.

2. Caoutchouc nitrile selon la revendication 1, ayant un indice ionique de formule générale (I) dans la plage allant de 5 à 30 ppm x mol/g, de manière particulièrement préférée allant de 10 à 25 ppm x mol/g,

$$II = 3 \left[ \frac{c(Ca^{2+})}{40 \text{ g/mol}} + \frac{c(Mg^{2+})}{24 \text{ g/mol}} \right] - \left[ \frac{c(Na^+)}{23 \text{ g/mol}} + \frac{c(K^+)}{39 \text{ g/mol}} \right] \quad (I)$$

dans laquelle $c(Ca^{2+})$, $c(Mg^{2+})$, $c(Na^+)$ et $c(K^+)$ représentent la concentration des ions calcium, magnésium, sodium et potassium dans le caoutchouc nitrile en ppm.

3.  Caoutchouc nitrile selon la revendication 1 ou 2, qui contient des unités de répétition d'acrylonitrile, de 1,3-butadiène et éventuellement d'un ou de plusieurs monomères copolymérisables supplémentaires.

4.  Caoutchouc nitrile selon la revendication 3, qui comprend des unités de répétition d'un ou de plusieurs acides mono- ou dicarboxyliques $\alpha,\beta$-insaturés, leurs esters ou amides, de préférence des unités de répétition d'un ester alkylique d'un acide carboxylique $\alpha,\beta$-insaturé, notamment de (méth)acrylate de méthyle, de (méth)acrylate d'éthyle, de (méth)acrylate de propyle, de (méth)acrylate de n-butyle, de (méth)acrylate de t-butyle, de (méth)acrylate d'hexyle, de (méth)acrylate de 2-éthylhexyle, de (méth)acrylate d'octyle ou de (méth)acrylate de lauryle.

5.  Caoutchouc nitrile selon une ou plusieurs des revendications 1 à 4, qui présente une viscosité de Mooney (ML (1+4 @100 °C)) de 10 à 150, de préférence de 20 à 100 unités Mooney.

6.  Caoutchouc nitrile selon une ou plusieurs des revendications 1 à 5, ayant une température de transition vitreuse dans la plage allant de -70 °C à +10 °C, de préférence dans la plage allant de -60 °C à 0 °C.

7.  Caoutchouc nitrile selon une ou plusieurs des revendications 1 à 6, qui comprend des groupes terminaux 2,2,4,6,6-pentaméthylheptane-4-thio et/ou 2,4,4,6,6-pentaméthylheptane-2-thio et/ou 2,3,4,6,6-pentaméthylheptane-2-thio et/ou 2,3,4,6,6-pentaméthylheptane-3-thio.

8.  Procédé de fabrication de caoutchoucs nitriles par polymérisation en émulsion d'au moins un nitrile $\alpha,\beta$-insaturé, d'au moins un diène conjugué et éventuellement d'un ou de plusieurs monomères copolymérisables supplémentaires en présence d'au moins un régulateur du poids moléculaire, le latex contenant le caoutchouc nitrile qui se forme lors de la polymérisation étant soumis à une coagulation et le caoutchouc nitrile coagulé étant ensuite lavé, **caractérisé en ce que**

    (i) le latex obtenu lors de la polymérisation en émulsion présente avant la coagulation un pH d'au moins 6,
    (ii) la coagulation du latex est réalisée en utilisant au moins un sel de magnésium en tant qu'agent de précipitation, jusqu'à 40 % en poids du sel de magnésium étant éventuellement remplacé par un sel de calcium,
    (iii) de la gélatine est utilisée en tant que co-agent de précipitation pour la coagulation,
    (iv) la température du latex avant le contact avec le co-agent de précipitation (iii) étant ajustée à une température d'au plus 50 °C et la température étant ensuite augmentée jusqu'à 100 °C, et
    (v) la coagulation du latex et/ou le traitement du latex coagulé est réalisé en utilisant de l'eau contenant des ions calcium, dans la mesure où la coagulation est réalisée en l'absence d'un sel de calcium en tant qu'agent de précipitation.

9.  Procédé selon la revendication 8, dans lequel au moins un alkylthiol est utilisé en tant que régulateur du poids moléculaire, qui contient 12 à 16 atomes de carbone et au moins trois atomes de carbone tertiaires, le soufre étant relié à un de ces atomes de carbone tertiaires.

10. Procédé selon la revendication 8 ou 9, dans lequel la polymérisation en émulsion est réalisée de manière discontinue ou continue dans une cascade de cuves agitées.

11. Procédé selon une ou plusieurs des revendications 8 à 10, dans lequel un ou plusieurs agents antivieillissement sont ajoutés au latex contenant le caoutchouc nitrile avant ou pendant la coagulation.

12. Procédé selon une ou plusieurs des revendications 8 à 11, dans lequel du chlorure de magnésium, du sulfate de magnésium et/ou du nitrate de magnésium est utilisé pour la coagulation du latex.

**13.** Procédé selon une ou plusieurs des revendications 8 à 12, dans lequel 0,1 à 10 % en poids, de préférence 0,5 à 5 % en poids, d'au moins un sel de magnésium par rapport au caoutchouc nitrile est utilisé pour la coagulation du latex.

**14.** Procédé selon une ou plusieurs des revendications 8 à 13, dans lequel seules des quantités d'au moins un sel de magnésium qui sont nécessaires pour la coagulation totale du caoutchouc nitrile sont utilisées pour la coagulation du latex.

**15.** Procédé selon une ou plusieurs des revendications 8 à 14, dans lequel la concentration de la solution du sel de magnésium, de préférence de la solution de chlorure de magnésium, est de 0,1 à 35 % en poids, de préférence de 0,5 à 30 % en poids.

**16.** Procédé selon une ou plusieurs des revendications 8 à 15, dans lequel le latex utilisé pour la coagulation présente une concentration en solides dans la plage allant de 1 % à 40 %, de préférence dans la plage allant de 5 % à 35 % et de manière particulièrement préférée dans la plage allant de 15 à 30 % en poids.

**17.** Procédé selon une ou plusieurs des revendications 7 à 16, dans lequel le latex est porté à une température de jusqu'à 100 °C, de préférence à une température dans la plage allant de 50 à 90 °C, après l'ajout de la solution d'au moins un sel de magnésium.

**18.** Procédé selon une ou plusieurs des revendications 8 à 17, dans lequel le lavage du caoutchouc nitrile coagulé est réalisé à une température dans la plage allant de 15 à 90 °C et de préférence à une température dans la plage allant de 45 à 70 °C.

**19.** Procédé selon une ou plusieurs des revendications 8 à 18, dans lequel le caoutchouc nitrile obtenu est ensuite soumis soit (i) uniquement à une réaction de métathèse, soit (ii) à une réaction de métathèse et à une hydrogénation ultérieure, soit (iii) uniquement à une hydrogénation.

**20.** Caoutchoucs nitriles éventuellement hydrogénés pouvant être obtenus par le procédé selon la revendication 19.

**21.** Utilisation des caoutchoucs nitriles selon une ou plusieurs des revendications 1 à 6 ou 20 pour la fabrication de mélanges vulcanisables.

**22.** Mélange vulcanisable contenant au moins un caoutchouc nitrile selon une ou plusieurs des revendications 1 à 6 ou au moins un caoutchouc nitrile éventuellement hydrogéné selon la revendication 20, au moins un agent de réticulation et éventuellement des additifs supplémentaires.

**23.** Procédé de fabrication d'un mélange vulcanisable selon la revendication 22, dans laquelle au moins un caoutchouc nitrile selon une ou plusieurs des revendications 1 à 6 ou au moins un caoutchouc nitrile éventuellement hydrogéné selon la revendication 20, au moins un agent de réticulation et éventuellement des additifs supplémentaires sont mélangés.

**24.** Procédé de fabrication des pièces moulées selon lequel un mélange vulcanisable selon la revendication 22 est vulcanisé dans le cadre d'un procédé de façonnage, de préférence en utilisant un procédé de moulage par injection.

**25.** Pièce moulée pouvant être obtenue par le procédé selon la revendication 24.

**26.** Pièce moulée selon la revendication 25, **caractérisée en ce qu'**il s'agit d'un joint, d'un capuchon, d'un tuyau ou d'une membrane, notamment d'un joint torique, d'un joint plat, d'un joint d'étanchéité tournant, d'une manchette d'étanchéité, d'un capuchon d'étanchéité, d'un capuchon de protection contre la poussière, d'un joint de connecteur, d'un tuyau à isolation thermique (avec et sans ajout de PVC), d'un tuyau refroidisseur d'huile, d'un tuyau d'aspiration d'air, d'un tuyau de servo-direction ou d'une membrane de pompe.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DD 154702
- JP 48027902 A
- WO 6932322 A
- DE OS2332096 A
- DE OS2425441 A
- US 5708132 A
- DE OS2751786 A
- DE 2751786 A
- DE OS3043688 A
- DE 3043688 A
- US 2487263 A
- US 4920176 A
- EP 1369436 A
- EP 0692496 A
- EP 0779301 A
- EP 0779300 A
- EP 779300 A
- DE 102007024011
- DE 102007024008
- DE 102007024010
- JP 7316126 A
- JP 7316127 A
- JP 7316128 A
- GB 823823 A
- GB 823824 A
- DE 102007024009
- US 4826721 A
- WO 021100941 A
- WO 02100905 A
- US 3700637 A
- DE 2539132 A
- EP 0134023 A
- DE 3541689 A
- DE 3540918 A
- EP 0298386 A
- DE 3529252 A
- DE 3433392 A
- US 4464515 A
- US 4503196 A
- EP 0471250 A
- US 4631315 A
- US 6683136 A
- DE 2332096 A

### In der Beschreibung aufgeführte Nicht-Patentliteratur

- **W. HOFMANN.** *Rubber Chem. Technol.,* 1963, vol. 36, 1
- Ullmann's Encyclopedia of Industrial Chemistry. VCH Verlagsgesellschaft, 1993, 255-261
- **HOUBEN-WEYL.** *Methoden der Org. Chemie, Makromolekulare Stoffe,* 1961, vol. 1, 484
- **HOUBEN-WEYL.** *Methoden der Org. Chemie, Makromolekulare Stoffe,* 1961, vol. 1, 479
- **HOUBEN-WEYL.** *Methoden der Org. Chemie, Makromolekulare Stoffe,* 1961, vol. 1, 484, 485
- Ullmann's Encyclopedia of Industrial Chemistry. vol. 31, 345-355
- Ullmann's Encyclopedia of Industrial Chemistry. vol. 13, 75-108
- Molecular weight control of elastomers prepared by emulsion polymerization. *Rubber Chemistry and Technology,* 1976, vol. 49 (3), 610-49
- **D. C. BLACKLEY.** Emulsion Polymerization, Theory and Practice. Applied Science Publishers Ltd London, 1975, 329-381
- Ullmanns Enzyklopädie der Technischen Chemie. Verlag Chemie, 1976, vol. 12, 211-220
- **B. WELZ.** Atomic Absorption Spectrometry. Verlag Chemie, 1985, 251-262